(19)

Europäisches
Patentamt
European
Patent Office
Office européen
des brevets

(11)  **EP 3 363 773 A1**

(12)  **EUROPEAN PATENT APPLICATION**

(43) Date of publication:
**22.08.2018   Bulletin 2018/34**

(51) Int Cl.:
*C03C 25/10* *(2018.01)*      *D06M 15/227* *(2006.01)*

(21) Application number: **17156653.2**

(22) Date of filing: **17.02.2017**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD** | (71) Applicant: **Trinseo Europe GmbH**<br>**8810 Horgen (CH)**<br><br>(72) Inventor: **Lakeman, Pascal**<br>**4816 AW Breda (NL)**<br><br>(74) Representative: **Hoffmann Eitle**<br>**Patent- und Rechtsanwälte PartmbB**<br>**Arabellastraße 30**<br>**81925 München (DE)** |

(54)  **FIBROUS SHEETS COATED WITH POLYOLEFIN COMPOSITIONS AND METHODS OF PREPARATION**

(57)    The present disclosure relates to a composition containing a fibrous sheet having one or more layers and a polymeric matrix. The polymeric matrix may coat from about 80 percent to about 100 percent of the surface of fibers forming the fibrous sheet. The present disclosure also relates to the preparation of compositions containing a fibrous structure coated with a polymeric matrix.

EP 3 363 773 A1

## Description

### FIELD

The present disclosure relates to fibrous sheets coated with a polymeric matrix including one or more polyolefins. The present disclosure also relates to the preparation of compositions including fibrous sheets having the polymeric matrix coated thereon.

### BACKGROUND

Thermoplastic polymers are utilized to prepare molded parts in a variety of industries, for example automotive, toys, appliances, farm and lawn tractors and implements, medical devices, food service items, electronic equipment components, and the like. Thermoplastic polymers provide significant advantages for molded products, for example, by providing lighter weight than some alternative materials, design flexibility, controlled conductivity, and the like. Thermoplastic polymers exhibit flexibility in processing which facilitates flexibility in design and production of designed products. Thermoplastic polymers are used in some industries to reduce weight in the resulting products, for instance in automobiles. In some applications thermoplastic polymers present challenges, for example higher coefficient of liner expansion (CLTE), lower modulus, lower strengths, lower conductivity and higher brittleness than alternative materials. Fillers, such as fibers, can be added to improve CLTE, modulus and based on the nature and content of the fibers, conductivity. For this reason many thermoplastic polymers are reinforced with long fibers, for instance long glass fibers, to provide mechanical strength, improved CLTE and heat resistance. Exemplary structures prepared from long glass fiber thermoplastics useful in automobiles include bumper beam carriers, spare wheel wells, door sill panels, battery carriers, front end carriers, acoustic shielding, underbody panels, instrument panel carriers and hatchbacks.

Processes for preparing long fiber reinforced thermoplastics are known in the art. In some processes long fiber strands are drawn through a melt of thermoplastic polymers to wet the fibers with the thermoplastic resin. The problem with these processes is that the fiber levels are lower than desired for some applications or processes used to manufacture articles. Processes for preparing fiber reinforced thermoplastics have been developed wherein fibers are passed through dispersions of thermoplastic polymers in water containing a dispersion stabilization agent to wet the fibers with the thermoplastic resin and removing at least part of the water. Typically the formed structures are cut to form pellets for use in further processing. Exemplary references disclosing relevant processes include US 6,818,698; US 5,437,928; US 5,891,284; US 5,972,166; US 2008/118728; and US 7,803,865; all incorporated herein by reference in their entirety.

Many of these processes utilize materials in the dispersion that require neutralization of the carboxylic acid groups in the polymers utilized so as to stabilize the dispersions for the process to work in an optimal manner. Typically the neutralizer is a base, such as sodium hydroxide, potassium hydroxide and ammonium based compounds. Many of the neutralizers can introduce undesirable odors into the formed thermoplastic concentrates. Ultimate users of the concentrates desire low or no odor materials. In many of the disclosed processes wetting of the fibers by the thermoplastic polymers is problematic and the resulting strands or dried pellets have fibers protruding such that the strands or pellets appear to have a fuzz, fluff or angel hairs on their surface. Such protruding fibers can inhibit further processing and can impact the surface appearance of resulting structures. Due to these wetting problems and fiber protrusion these strands or pellets may not be sufficiently robust to be transferred by certain highly efficient processes such as being conveyed by air means.

In many industrial processes the long fiber reinforced thermoplastic based structures are formed by blending concentrates of long glass fibers in thermoplastic polymers with pellets of unreinforced thermoplastic polymers, sometimes referred to as natural thermoplastic polymers. This is often colloquially referred to as a salt and pepper process. To enhance the productivity of some of these processes high flow rate natural thermoplastic polymers are utilized. In a number of these processes using polyolefins, polyolefins having high flow rates, prepared by breaking the polymer chains through a process of cracking, are utilized. The polyolefins are cracked by reacting them in the presence of peroxides to reduce the chain length and thus the viscosity. Cracked polyolefins contain high levels of volatile materials as a result of the process used to prepare the cracked polyolefins. The presence of volatile materials can present problems in downstream processing of the long fiber reinforced thermoplastic compositions.

In many structures only certain sections require higher strength materials. Structures prepared from a uniform composition of thermoplastic polymers and long fibers may contain more fibers than the structure requires which adds weight and cost which can be undesirable. Further there is always a demand for thermoplastic materials with higher moduli, tensile strengths, impact resistance and the like.

Fibrous sheets are used in a variety of application areas to provide reinforcement. These sheets are typically pre-impregnated and then are finally impregnated in the final mold with liquid ingredients that still need to harden out to a rigid polymer. This process has not been feasible for thermoplastics, as the thermoplastics cannot be applied in the same way. Woven and non-woven fiber containing structures where the fibers are coated with thermoplastic polymers are utilized in a number of applications, including reinforced automobile panels, structural components for a variety of structures, sporting goods, leisure items, reinforced tubes and conduits, wall papers, wall reinforcements, and the like. To effectively coat the fibers in these structures with thermoplastic polymers, it is conventional to coat the fibers with the polymers before formation of the structures. However, the fibers become quite stiff during this process, and weaving is difficult. Due to the difficulty in weaving, the types of possible weaves is limited. In addition, current processing for coating fibrous sheets or structures with thermoplastics leaves a significant surface area of the fibers in the structure un-coated. This negatively impacts the use of such structures because fibers that are not coated with thermoplastic polymers may not exhibit various desirable mechanical properties, such as flexural strength.

Thus, what is needed is are compositions of thermoplastic materials that exhibit one or more of the following characteristics: low fiber protrusion (reduced fluff, or angel hair formation); low concentration of volatile neutralizers that introduce odors; low concentration of volatile products from cracking of thermoplastic polymers; compositions that improve blending of natural thermoplastic polymers with long fiber concentrates or which eliminate the need for such blending; compositions that facilitate localized reinforcement of thermoplastic structures; and processes that facilitate the preparation of such compositions. What are also needed are compositions that can coat preformed structures from fibers. What are needed are compositions and processes that provide for structures that provide for structures that have improved thermal aging properties, require less energy to prepare, are able to be further shaped in a thermoforming operation, or a combination thereof.

## SUMMARY

Disclosed are compositions including a fibrous sheet having one or more layers and a polymeric matrix containing one or more polyolefins, one or more hindered phenol antioxidants, one or more phosphite antioxidants, one or more one or more acid neutralizers, one or more thioester antioxidants, or a combination thereof. The polymeric matrix of the compositions may coat a significant portion of the surface of the fibers forming the fibrous sheet. The polymeric matrix of the compositions may coat from about 80 percent to about 100 percent (or about 90 percent to about 100 percent) of the surface of the fibers forming the fibrous sheet. The composition may comprise about 20 percent by weight to about 95 percent by weight of fibers. The acid neutralizer of the composition may include one or more volatile nitrogen containing compounds. The one or more polyolefins of the composition may include maleic anhydride or a hydrolysis product thereof grafted to the backbone. The polymeric matrix may contain from about 5 percent by weight to about 15 percent by weight of one or more polyolefins with maleic anhydride or a hydrolysis product thereof grafted to the backbone. The polymeric matrix may contain a) from about 95.7 to about 99.96 percent by weight of one or more polyolefins; b) from about 0.01 to about 1.0 percent by weight of one or more hindered phenol antioxidants; c) from about 0.01 to about 0.1 percent by weight of one or more phosphite antioxidants; d) from about 0.01 to about 0.2 percent by weight of one or more thioester antioxidants; e) from about 0.01 to about 3.0 percent by weight of one or more acid neutralizers; or any combination thereof. The polymeric matrix coated on the surface of the fibers forming the fibrous sheet may have a thermoplastic composition that is coated about the polymeric matrix. The composition may be formed from two or more fibrous layers to form a multi-layer fibrous sheet. The composition may be formed from two or more fibrous layers with one or more polymeric layers, such as polypropylene layers. The polymeric layers may be located between the fibrous layers.

Disclosed are methods comprising: a) preforming a fibrous sheet; b) passing the fibrous sheet through one or more wetting baths for impregnating the fibrous sheet with a low viscosity, water-based polymer dispersion to form a polymeric matrix about the fibrous sheet; and c) passing the polymeric matrix and fibrous sheet through an oven to volatilize away the volatile components. The polymeric matrix may comprise one or more polyolefins, one or more hindered phenol antioxidants, one or more phosphite antioxidants, one or more acid neutralizers, and optionally one or more thoioester antioxidants. After exiting the oven, a thermoplastic composition may be coated on the polymeric matrix disposed on the fibrous sheet, which may then be passed through a second oven and pressed to bond the thermoplastic matrix to the polymeric matrix. The fibrous sheet may then be cut or otherwise shaped to the desired dimensions. The polymeric matrix may coat from about 80% to about 100% of the surface of the fibers of the fibrous sheet. The polymer dispersion may have a viscosity from about 10 centipoise to about 500 centipoise. The fibrous sheet through the one or more wetting baths may have a residence time of form about 0.5 meters per minute to about 25 meters per minute. The polymer dispersion may have a temperature of about 18 °C to about 30 °C. The polymeric matrix and fibrous sheet may have a residence time within the oven from about 10 seconds to about 300 seconds. The oven may have a temperature of from about 150°C to about 350°C. The method may include a step of cutting the polymeric matrix and fibrous sheet into a desired size. The method may include a step of calendering the polymeric matrix and fibrous sheet with a polymeric component, which optionally is a dissimilar polymeric component from the polymer dispersion to form the polymeric matrix. The polymeric component may be a thermoplastic composition. The thermoplastic composition may comprise a polyolefin. The polyolefin may have a melt flow rate of 70 or greater which is uncracked or prepared using metallocene catalysts. The method may include a step of thermoforming the polymeric matrix and fibrous sheet. The method may include a step of overmolding the thermoformed sheet with a thermoplastic or thermoelastomer. The fibrous structure may be overmolded with a polymeric material, filled polymeric material, where the polymeric material may comprise polyolefins, polyamides, polycarbonate, polyester, styrene polymers such as styrene-acrylonitrile, acrylonitrile-butadiene-styrene, and other styrene copolymers, grafted polymers, olefin copolymers, other engineering polymers, the compounds and blends of all of these mentioned polymers, or a combination thereof. The method may include a step of compressing the fibrous sheet with one or more polymer films located on one or both sides.

Disclosed is also a pre-formed fibrous sheet, which can be coated with the polymeric matrix to form the composition and/or the method as described herein. The fibrous sheet may be formed from woven fibers, nonwoven fibers, or a combination of woven and nonwoven fibers. The fibers of the fibrous sheet may be glass fibers, carbon fibers, metal based fibers, polymeric fibers, or a combination thereof. For some applications, it may be preferable to form the fibrous sheet from glass fibers. The fibrous sheet may have a glass content from about 15 percent by weight to about 85 percent by weight. The fibrous sheet may include about 10 percent to about 40 percent by weight of non-glass components. The fibrous sheet may include about 100 percent by weight of glass fibers, non-glass components, and the polymeric matrix. The fibrous sheet may be a multi-layer sheet.

The compositions may contain more than one type of fiber which allows tailoring of the properties of structures prepared from the compositions for a variety of needs.

Some of the compositions disclosed herein exhibit low volatile component content, such as one or more neutralization agents or polymer cracking catalysts or byproducts. Compositions containing thermoplastic polymer bonded to the polymeric matrix about the fibers or structures containing the fibers can reduce the amount of natural polymer required for dilution to the desired fiber content or prevent the need for blending the concentrate with natural polymers. Some of the structures that can be prepared can be used for localized reinforcement. Some of the compositions disclosed exhibit improved bonding of the fibers to the thermoplastic polymer which enhances the strength and modulus of the fiber reinforced thermoplastic polymers. Some of the compositions exhibit thermal stability. Some of the compositions can be prepared in a manner that reduces the energy required for their preparation, simplifies the process, or both. Some of the compositions are permitted to be further shaped, such as by a thermoforming operation.

## DESCRIPTION OF THE DRAWINGS

Figure 1 is a depiction of one layout of equipment used in a process disclosed herein.
Figure 2 is a depiction of a second layout of equipment used in a process disclosed herein.
Figure 3 is a graph of Melt Flow rate of the matrix blend against weight ratio of 44 melt flow rate polypropylene in the blend.
Figure 4 shows a graph of ratio of high flow polypropylene to glass and dispersion coated thereon (weight ratio).
Figure 5 is a graph of Creep test data with varying levels of hydrotalcite.

## DETAILED DESCRIPTION

The explanations and illustrations presented herein are intended to acquaint others skilled in the art with the invention, its principles, and its practical application. Accordingly, the specific embodiments of the present invention as set forth are not intended as being exhaustive or limiting of the invention. The scope of the invention should be determined with reference to the appended claims, along with the full scope of equivalents to which such claims are entitled. The disclosures of all articles and references, including patent applications and publications, are incorporated by reference for all purposes. Other combinations are also possible as will be gleaned from the following claims, which are also hereby incorporated by reference into this written description.

The disclosure relates to thermoplastic compositions comprising one or more polyolefins and fiber containing structures and processes for their preparation. Disclosed is a composition comprising a fibrous sheet having one or more layers and a polymeric matrix comprising one or more polyolefins, one or more hindered phenol antioxidants, one or more phosphite antioxidants, one or more acid neutralizers, and optionally one or more thioester antioxidants. The polymeric matrix may coat a significant amount of the surface of fibers forming the fibrous sheet. For example, the polymeric matrix may coat from about 90 percent to about 100 percent of the surface of fibers forming the fibrous sheet. The compositions are generally prepared by preforming a fibrous sheet, passing the fibrous sheet through one or more wetting baths for impregnating the fibrous sheet with a low viscosity, water-based polymer dispersion to form a polymeric matrix about the fibrous sheet, and passing the polymeric matrix and fibrous sheet through an oven to volatilize away volatile components. The fibrous sheet coated with polymeric matrix mat be cut into a desired length.

The compositions disclosed may further comprise any one or more of the features described in this specification in any combination, including the preferences and examples listed in this specification, and includes the following features: the fibrous sheet is formed from woven fibers; the fibrous sheet is formed from nonwoven fibers; the composition comprises about 20 percent by weight to about 95 percent by weight of fibers; the fibrous sheet is formed from glass fibers, carbon fibers, metal based fibers, polymeric fibers, or a combination thereof; the fibrous sheet is formed from glass fibers; the fibrous sheet has a glass content of from about 15 percent by weight to about 85 percent by weight; the fibrous sheet comprises about 10 percent to about 40 percent by weight of non-glass components; the fibrous sheet comprises about 100 percent by weight of glass fibers, non-glass components, and the polymeric matrix; the acid neutralizer comprises one or more volatile nitrogen containing compounds; the one or more polyolefins include maleic anhydride or a hydrolysis product thereof grafted to the backbone; the polymeric matrix contains from about 5 percent by weight to about 15 percent by weight of one or more polyolefins with maleic anhydride or a hydrolysis product thereof grafted to the backbone; the polymeric matrix comprises from about 95.7 to about 99.96 percent by weight of one or more polyolefins; the polymeric matrix comprises from about 0.01 to about 1.0 percent by weight of one or more hindered phenol antioxidants; the polymeric matrix comprises from about 0.01 to about 0.1 percent by weight of one or more phosphite antioxidants; the polymeric matrix comprises from about 0.01 to about 0.2 percent by weight of one or more thioester antioxidants; the polymeric matrix comprises from about 0.01 to about 3.0 percent by weight of one or more acid neutralizers; the polymeric matrix coated upon the surface of the fibers forming the fibrous sheet has a thermoplastic composition that is coated about the polymeric matrix; the composition further comprising two or more fibrous layers, and optionally including one or more polymeric layers therebetween, to form a multi-layer fibrous sheet; the polymeric matrix coats from about 80% to about 100% of the surface of the fibers of the fibrous sheet; the viscosity of the polymer dispersion is from about 10 centipoise to about 500 centipoise; a residence time of the fibrous sheet through the one or more wetting baths is from about 0.5 meters per minute to about 25 meters per minute; the polymer dispersion has a temperature of about 18 °C to about 30 °C; a residence time of the polymeric matrix and fibrous sheet in the oven is from about 10 seconds to about 300 seconds; the oven has a temperature from about 150°C to about 350°C; the fibrous sheet is a multi-layer sheet; the method comprises layering two or more fibrous layers, and optionally including one ro more polymeric layers therebetween, to form a multi-layer fibrous sheet; the method further comprises a step of cutting the polymeric matrix and fibrous sheet into a desired size; the method further comprises a step of calendering the polymeric matrix and fibrous sheet with a polymeric component from the polymer dispersion to form the polymeric matrix; the polymeric matrix comprises one or more polyolefins; the polymeric matrix comprises one or more hindered phenol antioxidants; the polymeric matrix comprises one or more phosphite antioxidants; the polymeric matrix comprises one or more acid neutralizers; the polymeric matrix comprise one or more thioester antioxidants; the polymeric component is a thermoplastic composition; the thermoplastic composition comprises a polyolefin having a melt flow rate of 70 or greater which is uncracked or prepared using metallocene catalysts; the method further comprises a step of thermoforming the polymeric matrix and fibrous sheet; the method further comprises a step of overmolding the thermoformed sheet with a thermoplastic or thermoelastomer; the fibrous structure is overmolded with a polymeric material, filled polymeric material, where the polymeric material may comprise polyolefins, polyamides, polycarbonate, polyester, sturene polymers such as styrene-acrylonitrile, acrylonitrile-butadiene-styrene, and other styrene copolymers, grafted polymers, olefin copolymers, other engineering polymers, the compounds and blends of all of these mentioned polymers, or a combination thereof; the method further comprises a step of compressing the fibrous sheet with one or more polymer films located on one or both sides.

One or more as used herein means that at least one, or more than one, of the recited components may be used as disclosed. Heteroatom means nitrogen, oxygen, sulfur and phosphorus, more preferred heteroatoms include nitrogen and oxygen. Hydrocarbyl refers to a group containing one or more carbon atom backbones and hydrogen atoms, which may optionally contain one or more heteroatoms. Where the hydrocarbyl group contains heteroatoms, the heteroatoms may form one or more functional groups well known to one skilled in the art. Hydrocarbyl groups may contain cycloaliphatic, aliphatic, aromatic or any combination of such segments. The aliphatic segments can be straight or branched. The aliphatic and cycloaliphatic segments may include one or more double and/or triple bonds. Included in hydrocarbyl groups are alkyl, alkenyl, alkynyl, aryl, cycloalkyl, cycloalkenyl, alkaryl and aralkyl groups. Cycloaliphatic groups may contain both cyclic portions and noncyclic portions. Hydrocarbylene means a hydrocarbyl group or any of the described subsets having more than one valence, such as alkylene, alkenylene, alkynylene, arylene, cycloalkylene, cycloalkenylene, alkarylene and aralkylene. As used herein percent by weight or parts by weight refer to, or are based on, the weight of the compositions unless otherwise specified.

The compositions disclosed herein contain fibers. The fibers may be used to form fibrous structures, such as fibrous sheets. The fibrous structures may be any such structures that can be coated in the coating baths containing the polyolefin dispersions. For example, the fibrous structures may be woven structures based on fibers, nonwoven structures containing fibers, woven structures from various tow rovings, structures of woven fibers of dissimilar composition, layers of a combination of woven and/or nonwoven sheets, and the like, or a combination thereof. Fibers and fibrous structures are used to enhance the properties of structures prepared from the compositions. Any fibers that improve the properties of structures made utilizing the fibers may be used in the compositions. Fibers may be utilized to improve one or more of the following properties: impact resistance, as demonstrated by notched Izod; modulus, as demonstrated by tensile modulus and flex modulus; tensile strength; improved creep resistance as determined by test method ASTM D2990 and the like. Exemplary fibers useful in the compositions disclosed include glass fibers, carbon fibers, metal based fibers, aramid and other polymeric fibers, such as polyester or polyamide, natural fibers, the like, and combinations thereof. Exemplary metal based fibers include stainless steel, and the like. Exemplary polymeric fibers include polyamide fibers, cellulose ether fibers, polyolefin fibers and the like. This disclosure contemplates the use of a mixture of types of fibers, for instance glass and stainless steel fibers or glass fibers and carbon fibers. Preferred classes of fibers are glass and polymeric fibers. The fibers may be glass and polymeric fibers. The fibers may be glass fibers. The fibrous structures disclosed may be utilized as concentrates containing high levels of fibers which are adapted to be mixed with other polyolefins that do not contain fibers. The concentrates containing fibers are typically blended with other polyolefins in ratios so as to prepare final structures having the concentration of fibers which provide the desired enhanced properties of the resulting structures. In a number of embodiments concentrates with higher concentrations of fibers are desired to promote efficient blending of the concentrates with other polyolefin compositions. The one or more fibers are present in the concentrates in a sufficient amount to enhance the properties of the final structures prepared using the concentrates and to efficiently disperse the fibers throughout the final structure. The fibers may be present in an amount of about 60 percent by weight or greater based on the weight of the concentrate, about 75 percent by weight or greater, or about 80 percent by weight or greater. The fibers may be present in an amount of about 95 percent by weight or less based on the weight of the composition, about 90 percent by weight or less, or about 88 percent by weight or less. Concentrate refers to the structures of fibers or fibrous sheets and polymeric matrix formed as disclosed herein.

The fibers may be any dimensions or combination of dimensions that provide the desired enhanced properties in the final structures containing the polyolefins and fibers. Among the dimensions that impact the desired properties is the length. The fibers are preferably provided in strands that are able to be formed into a fibrous sheet and then passed through the process steps as disclosed herein. The fibrous sheet with the polymeric matrix dispersed about and between the fibers may be cut at the end of the process. The length of the fibers may be based on the desired final use or the desired fibrous sheet. For example, the fibrous sheet may be a woven sheet, and the fibers must be of a sufficient length to be woven. The fibers may be continuous. The fibers may extend across the entire length of the sheet. The fibers may extend across the entire width of the sheet. The fibrous sheet may be formed of nonwoven fibers. The fibrous sheet may be formed of or may include shorter fibers that do not extend along the entire length or width of the sheet. In some embodiments longer fibers improve the creep resistance of the ultimate structures prepared from the structures of the disclosure.

The compositions may include elongated structures of the fibers forming a fibrous structure with the polymeric matrix dispersed between and coated about the fibers. The fibrous structure may be a fibrous sheet. Where the term fibrous sheet is used herein, it is contemplated that other structures are also within the scope of the teachings. The fibrous structure may be any fibrous structure, such as a sheet, that is formed and passed through the polymeric matrix as described. The fibrous structure or sheet may be formed using woven fibers. The fibers may be woven using any pattern, such as plain weave, twill, satin, basket, leno, mock leno, or the like. The weaving may be performed by any process for forming woven sheets out of fibers such as glass, polymers, or carbon. The fibrous sheet may be formed from nonwoven fibers. The nonwoven fibrous sheets may be formed by any conventional process for forming nonwoven sheets out of fibers such as glass, polymers, or carbon._ The fibrous structure, such as a sheet, may be formed as a sandwich combination of fiber reinforced mats. The fibrous structure, such as a sheet, may have one or more layers. The layers may be of the same material, different material, or a combination. For example, a sandwich structure of woven sheets on both sides of a nonwoven fibrous material is possible. The fibrous sheet may be preformed prior to dispersing and coating the fibers with the polymeric matrix.

The fibrous structure, such as a sheet, may be formed to have any desired shape or profile. The fibrous sheet may be generally planar. The fibrous sheet may have a generally uniform profile. The fibrous sheet may have a varying profile. The fibers may be oriented in any direction. Fibers may be oriented unidirectionally. Fibers may be oriented in two or more directions. Fibers may be generally oriented in the processing direction. Fibers may be generally oriented transverse to the processing direction. The fibers may have a mixture of orientations or generally random orientation. The fibrous sheet may have a generally smooth surface. The fibrous sheet may have a generally rough or textured surface. The fibrous sheet may be made of fibers having any cross-section. For example, the fibers may have a cross section that is round, oval, square, polygonal (triangular, rectangular, pentagonal, hexagonal, octagonal, or the like), or any other shape. The fibers may have a generally constant cross section, where the fiber is generally uniform in shape and size. The fibers may have a varying cross section, in shape, size, or both. The fibers of the fibrous sheet may be tightly arranged or densely packed so that voids between the fibers are minimized. The fibers of the fibrous sheet may be loosely arranged so that space or voids are between the fibers to allow for more of the polymeric matrix to coat the fibers and/or to reduce the drying time.

The fibers forming the fibrous sheets may be provided in bundles of elongated fibers typically called rovings which are delivered on spools. The measure Tex is a unit measure for the linear mass of density of fibers and is defined as the mass in grams per 100 meters. When measuring objects that consist of multiple fibers, the term "filament tex" is sometimes used, referring to the mass in grams per 1000 meters of a single filament. One can calculate the diameter of a filament yarn using tex with the following formula:

$$Diameter = \sqrt{\frac{Tex}{1000 \cdot density \cdot 0.7855}}$$

with density in grams per cubic centimeter and diameter in millimeters. The fibers may exhibit tex of 500 or greater, about 1000 or greater, or about 1200 or greater. The fibers may exhibit tex of 4000 or less, about 3600 or less, or about 1400 or less.

The fibers forming the fibrous sheets may contain coatings to enhance bonding of the fibers to the polymeric matrix. The coating may be matched to the coating to the polymeric matrix. Such coatings are sometimes referred to as sizing. Known coating or sizing compositions may be used on the fibers or fibrous sheets. For glass fibers, the sizing may be an alkyl silane having a reactive group. As used herein silane refers to the group $-Si-(OR)_a(R)_b$ wherein R is separately in each occurrence lower alkyl, a is 1 to 3 and b is 3 - a. The alkyl group for the alkyl silane may be a lower alkyl, such as ethyl, propyl or butyl. Exemplary reactive functional groups include amino styryl, aromatic, vinyl, glycidyl (epoxy), mercapto, cyanoacrylate, and the like, with amino and glycidyl being preferred in certain applications. The amount of coating or sizing on the fibers or fibrous sheet is an amount such that the bond between the polymeric matrix and the fibers is enhanced. The sizing may be present in an amount of about 0.25 percent by weight or greater based on the weight of the fibers and the sizing, or about 1.0 percent by weight or greater. The sizing may be present in an amount of about 3.5 percent by weight or less based on the weight of the fibers and the sizing, or about 2.2 percent by weight or less. The fiber suppliers may provide the fibers with the coating or sizing pre-applied. Alternatively, the fibers can be coated with the coating or sizing by passing the fibers or preformed fibrous sheet through a bath containing the coating or sizing under conditions such that the coating or sizing is applied to the surface of the fibers. The sizing on the fibers may be removed if the sizing inhibits adhesion between the polymeric matrix and the fibers. The sizing can be removed by passing the fibers or fibrous sheet through a high temperature oven, for example at 650 °C or greater, or through a highly basic bath, for instance a bath of NaOH.

The fibrous structures can be woven, nonwoven, a sandwich structure, granular with defined length, the like, or a combination of these structures. These structures may contain sizing as described herein. The structures can be in any size or shape that can be passed through a bath as described herein. The structures may be in sheet form, in tube form, in rod form, in tape form, the like, or a combination thereof. Elongated sheets of the structures can be passed through the bath and other processing steps. The fibrous structures can be used as coated with the polymeric matrix. The fibrous structures coated with the polymeric matrix can have one or more surfaces further coated with one or more of the thermoplastic compositions disclosed herein. The coating can be performed using a known calendering process, a spray process, a lamination process, powder coating process, the like, or a combination thereof. The fibrous structures coated with the polymeric matrix can be processed to make structures having 3 dimensional shapes using dies and presses, thermoforming processes, hot folding processes, hot bending processes, and the like. The amount of polymer or plastics coating the fibers of the fibrous sheet may be selected based on the shaping operation. For example, if a thermoforming step occurs, there may be a need for more polymer or plastic, such as about 40% or more, about 50% or more, or about 60% or more. The fibrous structures coated with the polymeric matrix and optionally having one or more surfaces coated with one or more thermoplastic compositions exhibit the following advantaged properties: high structural performance, superior strength in the fiber direction(s) at a lower weight and thickness of the structure, improved ability to tune the properties and/or dimensions of the material based on desired application, and the like.

The composition comprising the polymeric matrix and the fibers or fibrous structure may be prepared by passing fibers or fibrous sheet or other structure through one or more wetting baths of a polymer dispersion. The baths may be a low viscosity, water-based polymer dispersion to form the polymeric matrix about the fibrous sheet. The polymer dispersion may comprising water, and one or more polyolefins, one or more antioxidants, one or more acid neutralizers. The water may be removed in the polymeric matrix and on the fibrous sheet with the polymeric matrix disposed thereon upon exiting the bath. Any means of removing water may be used. One or more rods may be used to remove water by passing the fibrous structure over and/or under the rods. The rods may be positioned so that upon exiting the bath, the sheet is pulled across, over, and/or under one or more rods to wipe off excess water or polymer dispersion. For example, a series of metal rods may be employed, where the fibrous structure is pulled over, under, under, and over four rods, respectively. One or more of the rods may have a texture or comb-like profile. The water may be removed by passing the fibrous structure, such as a fibrous sheet, and the polymeric matrix through an oven. This may be performed after wiping off the sheet with the rods. The oven may volatilize away any volatile components. In addition to or in the alternative the fibrous sheet with the polymeric matrix disposed thereon can be passed through a flowing gas or a vacuum to enhance removal of the water. In some embodiments the flowing gas or vacuum can be present in the oven. After exiting the oven, the fibrous sheet with the polymeric matrix dispersed in and disposed on the fibers may be cut to the desired length.

The polymeric matrix comprises a polyolefin mixture that contains one or more polyolefins. A polyolefin is a polymer prepared by polymerization of unsaturated groups of one or more compounds having a straight or branched hydrocarbon chain. Exemplary olefin monomer compounds include those having a straight or branched hydrocarbon chain, such as ethylene, propylene, 1-butene, 3-methyl-1-butene, 4-methyl-l-pentene, 3-methyl-l-pentene, 1-heptene, 1-hexene, 1-octene, 1-decene, and 1- dodecene. The polyolefins useful can be homopolymers or copolymers of more than one compounds having a straight or branched hydrocarbon chain. Any polyolefin that can molded may be utilized in the composition. The polyolefins may comprise elastomers and blends of olefin polymers. Exemplary polyolefins include polyethylene, polypropylene, poly-1-butene, poly-3-methyl-1-butene, poly-3-methyl-1-pentene, poly-4-methyl-l-pentene, ethylene-propylene copolymers, ethylene-1-butene copolymers, and propylene-1-butene copolymers copolymers (including elastomers) of an alpha-olefin with a conjugated or non-conjugated diene, as typically represented by ethylene-butadiene copolymers and ethylene-ethylidene norbornene copolymers; and polyolefins (including elastomers) such as copolymers of two or more alpha-olefins with a conjugated or non-conjugated diene, as typically represented by ethylene-propylene-butadiene copolymers, ethylene-propylene-dicyclopentadiene copolymers, ethylene-propylene-1,5 -hexadiene copolymers, and ethylene-propylene-ethylidene norbornene copolymers; ethylene-vinyl compound copolymers such as ethylene-vinyl acetate copolymers, ethylene-vinyl alcohol copolymers, ethylene-vinyl chloride copolymers, ethylene acrylic acid or ethylene-(meth)acrylic acid copolymers, and ethyl ene-s (meth)acrylate copolymers. Exemplary polyolefins may be ethylene-based polymers, propylene-based polymers, propylene-ethylene copolymers, ethylene-alpha olefin copolymers or propylene-alpha olefin copolymers, ethylene-propylene-diene terpolymers. Exemplary olefinic polymers include homogeneous polymers, as described in U.S. Pat. No. 3,645,992 issued to Elston; high density polyethylene (HDPE), as described in U.S. Pat. No. 4,076,698 issued to Anderson; heterogeneously branched linear low density polyethylene (LLDPE); heterogeneously branched ultra-low linear density polyethylene (ULDPE); homogeneously branched, linear ethylene/alpha-olefin copolymers; homogeneously branched, substantially linear ethylene/alpha-olefin polymers, which can be prepared, for example, by processes disclosed in U.S. Pat. Nos. 5,272,236 and 5,278,272, the disclosures of which are incorporated herein by reference; and high pressure, free radical polymerized ethylene polymers and copolymers such as low density polyethylene (LDPE) or ethylene vinyl acetate polymers (EVA). The polyolefin may be a propylene-based copolymer or interpolymer. The propylene-based copolymer or interpolymer may be characterized as having substantially isotactic propylene sequences. The term "substantially isotactic propylene sequences" and similar terms mean that the sequences have an isotactic triad (mm) measured by 13 C NMR of greater than about 0.85 in one embodiment; greater than about 0.90 in another embodiment; greater than about 0.92 in another embodiment; and greater than about 0.93 in yet another embodiment. Isotactic triads are well-known in the art and are described in, for example, U.S. Pat. No. 5,504,172 and WO 00/01745, which refer to the isotactic sequence in terms of a triad unit in the copolymer molecular chain determined by 13 C NMR spectra. The propylene-based polymer may be a propylene-ethylene copolymer or interpolymer, where ethylene may be present in an amount from about 5% to about 25% by weight. In some embodiments, the propylene-rich alpha-olefin interpolymer is characterized as having an isotactic triad (mm) measured by 13 C NMR of greater than about 0.85. Some such propylene-rich alpha-olefin interpolymers may have from 5 to 25% by weight of ethylene-derived units and 95 to 75% by weight of propylene-derived units. Additionally, some propylene-rich alpha-olefin interpolymers have (a) a melting point of less than 90 °C; (b) a relationship of elasticity to 500% tensile modulus such that the elasticity is less than or equal to 0.935M+12, where elasticity is in percent and M is the 500% tensile modulus in MPa; and (c) a relationship of flexural modulus to 500% tensile modulus such that flexural modulus is less than or equal to $4.2e^{27M}$ +50, where flexural modulus is in MPa and M is the 500% tensile modulus in MPa. The propylene rich alpha-olefin interpolymer may comprise 6 to 20 percent by weight of ethylene-derived units and 94 to 80percent by weight of propylene-derived units. The polymers may comprise 8 to 20 percent by weight of ethylene-derived units and 92 to 80% by weight of propylene-derived units. The polymers may comprise 10 to 20 percent by weight of ethylene-derived units and 90 to 80 percent by weight of propylene-derived units.

The polyolefin may comprise an alpha-olefin interpolymer of ethylene with a comonomer comprising an alkene, such as 1- octene. The ethylene and octene copolymer may be present alone or in combination with another polyolefin resin. When present together, the weight ratio between the ethylene and octene copolymer and another polymer may range from about 1:10 to about 10:1, such as from about 3:2 to about 2:3. The polymeric resin, such as the ethylene-octene copolymer, may have a crystallinity of less than about 50 percent, such as less than about 25 percent. The crystallinity of the polymer may range from 5 to 35 percent. The polyolefins may include at least one multi-block olefin interpolymer. Suitable multi-block olefin interpolymers may include those described in U.S. 8,916,640, for example. The term "multi-block copolymer" or refers to a polymer comprising two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. The blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The multi-block copolymers are characterized by unique distributions of polydispersity index (PDI or Mw/Mn), block length distribution, and/or block number distribution due to the unique process making of the copolymers. More specifically, when produced in a continuous process, embodiments of the polymers may possess a PDI ranging from about 1.7 to about 8; from about 1.7 to about 3.5 in other embodiments; from about 1.7 to about 2.5 in other embodiments; and from about 1.8 to about 2.5 or from about 1.8 to about 2.1 in yet other embodiments. When produced in a batch or semi-batch process, embodiments of the polymers may possess a PDI ranging from about 1.0 to about 2.9; from about 1.3 to about 2.5 in other embodiments; from about 1.4 to about 2.0 in other embodiments; and from about 1.4 to about 1.8 in yet other embodiments. One example of the multi-block olefin interpolymer is an ethylene/$\alpha$-olefin block interpolymer. Another example of the multi-block olefin interpolymer is a propylene/$\alpha$-olefin interpolymer. The following description focuses on the interpolymer as having ethylene as the majority monomer, but applies in a similar fashion to propylene-based multi-block interpolymers with regard to general polymer characteristics. The ethylene/$\alpha$-olefin multi-block copolymers may comprise ethylene and one or more co-polymerizable $\alpha$-olefin comonomers in polymerized form, characterized by multiple (i.e., two or more) blocks or segments of two or more polymerized monomer units differing in chemical or physical properties (block interpolymer). In some embodiments, the copolymer is a multi-block interpolymer. In some embodiments, the multi-block interpolymer may be represented by the following formula: (AB) n where n is at least 1, and in various embodiments n is an integer greater than 1, such as 2 to 100, or higher; "A" represents a hard block or segment; and "B" represents a soft block or segment. Preferably, A's and B's are linked in a linear fashion, not in a branched or a star fashion. "Hard" segments refer to blocks of polymerized units in which ethylene is present in an amount greater than 95 weight percent in some embodiments, and in other embodiments greater than 98 weight percent. In other words, the comonomer content in the hard segments is less than 5 weight percent in some embodiments, and in other embodiments, less than 2 weight percent of the total weight of the hard segments. In some embodiments, the hard segments comprise all or substantially all ethylene. "Soft" segments, on the other hand, refer to blocks of polymerized units in which the comonomer content is greater than 5 weight percent of the total weight of the soft segments in some embodiments, greater than 8 weight percent, greater than 10 weight percent, or greater than 15 weight percent in various other embodiments. In some embodiments, the comonomer content in the soft segments may be greater than 20 weight percent, greater than 25 weight percent, greater than 30 weight percent, greater than 35 weight percent, greater than 40 weight percent, greater than 45 weight percent, greater than 50 weight percent, or greater than 60 weight percent in various other embodiments. In other embodiments, the block copolymers do not have a third block. In still other embodiments, neither block A nor block B comprises two or more segments (or sub-blocks), such as a tip segment.

Elastomeric interpolymers of ethylene, a C $_{3-20}$ $\alpha$-olefin, especially propylene, and optionally one or more diene monomers may be used as the polyolefins. Preferred $\alpha$-olefins for use in this embodiment are designated by the formula CH$_2$=CHR*, where R* is a linear or branched alkyl group of from 1 to 12 carbon atoms. Examples of $\alpha$-olefins include, but are not limited to, propylene, isobutylene, 1-butene, 1-pentene, 1-hexene, 4-methyl-l-pentene, and 1-octene. The $\alpha$-olefin may be propylene. The propylene-based polymers may be EP or EPDM polymers and may include dienes. Exemplary dienes include conjugated or non-conjugated, straight or branched chain-, cyclic- or polycyclic-dienes comprising from 4 to 20 carbons. Such dienes include 1,4-pentadiene, 1,4-hexadiene, 5-ethylidene-2-norbornene, dicyclopentadiene, cyclohexa diene, and 5-butylidene-2-norbornene. The diene may be 5-ethylidene-2-norbornene.

The polyolefins may be functionalized by incorporating at least one functional group in its polymer structure. Exemplary functional groups may include carboxylic acids or structures that form carboxylic acids upon hydrolysis in water, for example maleic anhydride. Ethylenically unsaturated compounds that can introduce such functional groups into the backbone of the polyolefins include ethylenically unsaturated mono- and di-functional carboxylic acids, ethylenically unsaturated mono- and di-functional carboxylic acid anhydrides, salts thereof and esters thereof. Such functional groups may be grafted to an olefin polymer, or it may be copolymerized with an olefin, such as ethylene or propylene, and an optional additional comonomer to form an interpolymer of olefin, the functional comonomer and optionally other comonomer(s). Means for grafting functional groups onto polyolefins are described for example in U.S. Patents Nos. 4,762,890, 4,927,888, and 4,950,541, the disclosures of which are incorporated herein by reference in their entirety. One particularly useful functional group is maleic anhydride. The amount of the functional group present in the functional polymer may vary and is chosen to enhance the final properties of the composition of the invention. The functional group may be present in an amount of about 0.25 weight percent or more in some embodiments; about 5 weight percent or more in other embodiments; and about 7 weight percent or more in yet other embodiments based on the weight of the polyolefins present. The functional group may be present in an amount of about 40 weight percent or less in some embodiments; about 30 weight percent or less in other embodiments; and about 25 weight percent or less in yet other embodiments based on the weight of the polyolefins present.

The polyolefins may comprise one or more non-polar polyolefins. The polyolefins may comprise one or more non-polar polyolefins and one or more functionalized polyolefins. The functionalized polyolefins may contain carboxylic acids, for example ethylene acrylic acid, or groups which form carboxylic acids upon hydrolysis of functional groups present, for example maleic anhydride groups. The polyolefin mixture may comprise one or more non-polar polyolefins, optionally one or more functional polyolefins, and one or more impact polyolefins. An impact polyolefin is a polyolefin having its backbone modified to improve the elasticity of the polyolefin so as to improve the impact resistance of compositions containing the impact polyolefin. Impact polyolefins comprise one or more of the following polyolefins: copolymers of an alpha-olefin with a conjugated or non-conjugated diene, as typically represented by ethylene-butadiene copolymer and ethylene-ethylidene norbornene copolymer; copolymers of two or more alpha-olefins with a conjugated or non-conjugated diene, as typically represented by ethylene-propylene-butadiene copolymer, alpha-olefin interpolymer of ethylene with a comonomer comprising an alkene, such as 1- octene; multi-block olefin interpolymers; with interpolymers of ethylene, a $C_3$ - $C_{20}$ $\alpha$-olefin, especially propylene, and optionally one or more diene monomers.

Generally the polyolefins useful in the composition, or polyolefin mixture of the composition, may exhibit any molecular weight that provides a moldable composition. The polyolefins may exhibit a weight average molecular weight, as measured by GPC using a Agilent PLgel Olexis column and polystyrene standards, as described in Analysis of Polyolefins by GPC/;SEC Application Compendium, by Greg Saunders and Ben MacCreath of Agilent Technologies, Inc" 2011 (available at www.agilent.com/chem/gpcsec), of about 10,000 Daltons or greater, about 30,000 Daltons or greater, about 50,000 Daltons or greater, or about 100,000 Daltons or greater. The polyolefins may exhibit a weight average molecular weight as measured by GPC of about 400,000 Daltons or less, about 350,000 Daltons or less, about 300,000 Daltons or less, or about 260,000 Daltons or less. The non-polar polyolefins exhibit a weight average molecular weight as measured by GPC of about 10,000 Daltons or greater, about 30,000 Daltons or greater, or about 100,000 Daltons or greater. The non-polar polyolefins may exhibit a weight average molecular weight of about 400,000 Daltons or less, about 350,000 Daltons or less, about 300,000 Daltons or less, about 260,000 Daltons or less, or about 240,000 Daltons or less. The functionalized polyolefins may exhibit a weight average molecular weight as measured by GPC of about 2,000 Daltons or greater, about 3,000 Daltons or greater, about 5,000 Daltons or greater, or about 10,000 Daltons or greater. The functionalized polyolefins may exhibit a weight average molecular weight as measured by GPC of about 200,000 Daltons or less, about 160,000 Daltons or less, about 130,000 Daltons or less, or about 100,000 Daltons or less.

The polyolefins may be present in the polymeric matrix an amount of about 4 percent by weight or greater based on the weight of the polymeric matrix, about 8 percent by weight or greater, or about 10 percent by weight or greater. The polyolefins may be present in the polymeric matrix in an amount of about 30 percent by weight or less based on the weight of the polymeric matrix, about 25 percent by weight or less, or about 20 percent by weight or less. Where there is a mixture of non-polar polyolefins and functional polyolefins, the non-polar polyolefins may be present in the polymeric matrix in an amount of about 2 percent by weight or greater based on the weight of the polymeric matrix, about 4 percent by weight or greater, or about 6 percent by weight or greater. Where there is a mixture of non-polar polyolefins and functional polyolefins, the non-polar polyolefins may be present in the polymeric matrix in an amount of about 15 percent by weight or less based on the weight of the polymeric matrix, about 12 percent by weight or less, or about 10 percent by weight or less. Where there is a mixture of non-polar polyolefins and functional polyolefins, the functional polyolefins may be present in the polymeric matrix in an amount of about 2 percent by weight or greater based on the weight of the polymeric matrix, about 4 percent by weight or greater, or about 6 percent by weight or greater. Where there is a mixture of non-polar polyolefins and functional polyolefins, the functional polyolefins may be present in the polymeric matrix in an amount of about 15 percent by weight or less based on the weight of the polymeric matrix, about 12 percent by weight or less, or about 10 percent by weight or less. The weight ratio of non-polar to functional polyolefins in the polymeric matrix is about 1:5 or greater, about 1:2 or greater, or about 2:3 or greater. The ratio of non-polar to functional polyolefins in the polymeric matrix is about 5:1 or less, about 5:2 or less, or about 5:3 or less. Where there is a mixture of non-polar polyolefins and impact polyolefins, the impact polyolefins may be present in the polymeric matrix in an amount of about 0.5 percent by weight or greater based on the weight of the polymeric matrix, about 1.0 percent by weight or greater, or about 2.0 percent by weight or greater. Where there is a mixture of non-polar polyolefins and impact polyolefins, the impact polyolefins may be present in the polymeric matrix in an amount of about 10 percent by weight or less based on the weight of the polymeric matrix, about 8 percent by weight or less, or about 6 percent by weight or less.

The polymeric matrix may further comprise one or more hindered phenol antioxidants which function by scavenging peroxy radical intermediates in the polymeric matrix. The one or more hindered phenol antioxidants are present in sufficient amount to scavenge peroxy radical intermediates in the polymeric matrix. Any hindered phenol antioxidant that performs the recited function may be used in the polymeric matrix. Exemplary hindered phenol antioxidants include compounds with one or more mono-hydroxyphenyl (i.e., "phenol") moieties and one or more aliphatic or aromatic substituents wherein each mono-hydroxyphenyl moiety contains one or preferably two aliphatic substituents, e.g. methyl, tert. -butyl, tert.-pentyl, at least one thereof being located in the ortho-position relative to the phenolic OH. Specific hindered phenol antioxidants include: alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butyl-phenol, 2,6-di-tert-butyl-4-isobutylphenol, 2,6-dicyclopentyl-4-methylphenol, 2-($\alpha$-methylcyclohexyl)-4,6-dimethylphenol, 2,6-dioctadecyl-4-methylphenol, 2,4,6-tricyclohexylphen-ol, 2,6-di-tert-butyl-4-methoxymethylphenol, 2,6-di-nonyl-4-methylphenol, 2,4'-di-methyl-6-(1'-methyl undec-1'-yl)phenol, 2,4-dimethyl-6-(1'-methylheptadec-1'-yl)phenol, 2,4-di-methyl-6-(1'-methyltridec-1'-yl)phenol and mixtures thereof; alkylthiomethylphenols, for example 2,4-di octylthiomethyl-6-tert-butylphenol, 2,4-dioctylthiomethyl-6-methylphenol, 2,4-dioctyl thio methyl-6-ethylphenol, 2,6-didodecylthiomethyl-4-nonylphenol; hydroquinones and alkylated hydroquinones, for example 2,6-di-tert-butyl-4-methoxyphenol, 2,5-di-tert-butyl hydroquinone, 2,5-di-tert-amylhydroquinone, 2,6-diphenyl-4-octadecyl-oxyphenol, 2,6-di-tert-butylhydroquinone, 2,5-di-tert-butyl4-hydroxyanisole, 3,5-di-tert-butyl-4-hydroxy- anisole, 3,5-di-tert-butyl-4-hydroxyphenylstearate, bis-(3,5-di-tert-butyl-4-hydroxy phenyl) adipate; hydroxylated thiodiphenyl ethers, for example 2,2'-thiobis(6-tert-butyl-4-methyl phenol), 2,2'-thiobis(4-octylphenol), 4,4'-thiobis(6-tert-butyl-3-methyl-phenol), 4,4'-thiobis (6-tert-butyl-2-methylphenol), 4,4'-thiobis-(3,6-di-sec-amylphenol), 4,4'-bis-(2,6-dimethyl-4-hydroxyphenyl)disulfide; alkylidenebisphenols, for example 2,2'-methylene bis (6-tert-butyl-4-methylphenol), 2,2'-methylenebis(6-tert-butyl-4-ethylphen-ol), 2,2'-methylenebis 4-methyl-6-(a-methylcyclohexyl)phenol, 2,2'-methylenebis(4-methyl-6-cyclohexyl phenol), 2,2'-methylenebis(6-nonyl-4-methylphenol), 2,2'-methylenebis(4,6-di-tert-butyl phenol), 2,2'-ethylidenebis(4,6-di-tert-butylphenol), 2,2'-ethylidenebis(6-tert-butyl-4-isobutyl phen-ol), 2,2'-methylenebis 6-(a-methylbenzyl)-4-nonyl-phenol, 2,2'-methylenebis 6-(a,a-di-methylbenzyl)-4-nonylphenol, 4,4'-methylenebis(2,6-di-tert-butyl phenol), 4,4'-methylene-bis-(6-tert-butyl-2-methylphenol), 1,1-bis(5-tert-butyl-4-hydroxy-2-methyl phenyl) butane, 2,6-bis(3-tert-butyl-5-methyl-2-hydroxybenzyl)-4-methylphenol, 1,1,3-tris (5-tert-butyl-4-hydroxy-2-methylphenyl)butane, 1,1-bis(5-tert-butyl-4-hydroxy-2-methyl-phenyl)-3-n-do-decylmercaptobutane, ethylene glycol bis 3,3-bis (3'-tert-butyl-4'-hydroxy phenyl)butyrate, bis(3-tert-butyl-4-hydroxy-5-methyl-phenyl) di-cyclopentadiene, bis 2-(3'-tert-butyl-2'-hy-droxy-5'-methylbenzyl)-6-tert-butyl-4-methyl phenylterephthalate, 1,1-bis-(3,5-dimethyl-2-hydroxyphenyl)butane, 2,2-bis-(3,5-di-tert-butyl-4-hydroxyphenyl) propane, 2,2-bis-(5-tert-butyl-4-hydroxy2-methylphenyl)-4-n-doecyl-ercaptobutane, and 1,1,5,5-tetra-(5-tert-butyl-4-hydroxy2-methylphenyl)pentane; 3,4-Dihydro-2,5,7,8-tetramethyl-2-(4,8,12-tri-methyltridecyl)-2H-1-benzopyran-6-ol (Vitamin E). The phenol antioxidant may be 3,4-Dihydro-2,5,7,8-tetramethyl-2-(4,8,12-trimethyltridecyl)-2H-1-benzopyran-6-ol (Vitamin E). The presence of 3,4-Dihydro-2,5,7,8-tetramethyl-2-(4,8,12-trimethyl-tridecyl)-2H-1-benzo pyran-6-ol (Vitamin E) improves the creep strength of the polymer matrix coated fibrous sheet. The hindered phenol antioxidants may be present in an amount of about 0.01 percent by weight or greater based on the weight of the polymeric matrix, about 0.1 percent by weight or greater, or about 0.2 percent by weight or greater. The one or more hindered phenol antioxidants may be present in an amount of about 2 percent by weight or less based on the weight of the polymeric matrix, about 1.0 percent by weight or less, or about 0.8 percent by weight or less.

The polymeric matrices may further comprise one or more phosphite antioxidants. Any phosphite antioxidant that performs the function of stabilizing the composition against oxidation may be used. Exemplary phosphites include triphenyl phosphite, diphenylalkyl phosphites, phenyldialkyl phosphites, tris-(nonylphenyl)-phosphite, trilauryl phosphite, trioctadecyl phosphite, distearyl-pentaerythrite diphos-phate, tris-(2,4-di-tert-butylphenyl)-phosphite, diisodecylpentaerythrite-diphosphite, bis-(2,4-di-tert-butyl phenyl)-pentaerythrite diphosphate, bis-(2,6-di-tert-butyl-4-methyl-phenyl)-pentaerythrite diphosphate, bis-isodecyloxy-pentaerythrite diphosphate, bis-(2,4-di-tert-butyl-6-methylphenyl)-pentaerythrite diphosphate, bis-(2,4,6-tri-tert-butylphenyl)-pentaerythrite diphosphate, tristearyl-sorbit-triphos-phite, tetrakis-(2,4-di-tert-butyl-phenyl)-4,4'-biphenylene-di-phosphonite, 6-isooctyloxy-2,4,8,10-tetra-tert-butyl-12H-di-benz[d,g]-1,3,2-dioxa-phosphocine, 6-fluoro-2,4,8,1,0-tetra-tert-butyl-12-methyl-dibenz [d,g]-1,3,2-dioxaphosphocine, bis-(2,4-di-tert-butyl-6-methylphenyl)-methyl phosphite, bis-(2,4-di-tert-butyl-6-meth-ylphenyl)-ethyl phosphitebis-(2,4-dicumylphenyl) penta erythritol diphosphite (DOVERPHOS™ S-9228) tris-(2,4-di-t-butylphenyl) phosphite (DOVERPHOS™ S-480), distearyl pentaerythritol diphosphite (DOVERPHOS™ S-680), trisnonylphenyl phosphite (DOVERPHOS™ 4), phenyl diisodecyl phosphite (DOVERPHOS™ 7), diphenyl isodecyl phosphite (DOVERPHOS™ 8), triphenyl phosphite (DOVERPHOS™ 10), trilauryl phosphite (DOVERPHOS™ 53), alkyl (C12-C15) bisphenol A phosphite (DOVERPHOS™ 613), alkyl (C10) bisphenol A phosphite (DOVERPHOS™ 675), bis-(2,4-di-t-butylphenyl) pentaerythritol diphosphite (ULTRANOX™ 626), 2-butyl-2-ethyl-1,3-propanediol 2,4,6-tri-t-butylphenol phosphite (ULTRANOX™ 641), bis-(2,6-di-t-butyl-4-methylphenyl) pentaerythritol diphosphite (PEP 36), tetrakis-(2,4-di-t-butylphenyl) 4,4'-diphenylene diphosphonite (P-EPQ), 2,2'-ethylidene bis-(4,6-di-t-butylphenyl)fluorophosphonite (ETHANOX™ 398), bis-(2,4-di-t-butyl-6-methylphenyl) ethyl phosphite (IRGAFOS™ 38) and 2,2',2"-nitrilotriethanol tris[3,3',5,5'-tetra-tert-butyl-1,1'-biphenyl-2,2'-diyl)-phosphite (IRGAFOS 12), and tris-(2,4-di-t-butylphenyl) phosphite (DOVERPHOS S-480™). The phosphite antioxidants may be present in sufficient amount to stabilize the polymer matrix against oxidation during the heat processing steps. The phosphite antioxidants may be present in an amount of about 0.01 percent by weight or greater based on the weight of the polymeric matrix, about 0.02 percent by weight or greater, or about 0.04 percent by weight or greater. The phosphite antioxidants may be present in an amount of about 0.3 percent by weight or less based on the weight of the polymeric matrix, about 0.25 percent by weight or less, or about 0.2 percent by weight or less.

The polymeric matrix may further comprise one or more thioester antioxidants. Any alkylthiomethyl phenols, hydroxylated thiodiphenylethers, which decompose hydroperoxide groups by reduction without producing new radicals may be used. Exemplary thioester antioxidants include 2,4-di-octylthiomethyl-6-tert-butylphenol, 2,4-di-octylthiomethyl-6-methylphenol, 2,4-di-octylthiomethyl-6-ethylphenol, 2,6-di-dodecylthio-methyl-4-nonylphenol, 2,2'-thio-bis-(6-tert-butyl-4-methylphenol), 2,2'-thio-bis-(4-octyl-phenol), 4,4'-thio-bis-(6-tert-butyl-3-methylphenol), 4,4'-thio-bis-(6-tert-butyl-2-methyl-phenol), 4,4'-thio-bis-(3,6-di-sec.-amylphenol), 4,4'-bis-(2,6-di-methyl-4-hydroxyphenyl)-disulphide. The one or more thioester antioxidants are present in sufficient amount to stabilize the polymeric matrix under processing conditions. The one or more thioester antioxidants may present in an amount of about 0.01 percent by weight or greater based on the weight of the polymeric matrix, about 0.02 percent by weight or greater, or about 0.04 percent by weight or greater. The one or more thioester antioxidants may be present in an amount of about 0.3 percent by weight or less based on the weight of the polymeric matrix, about 0.25 percent by weight or less, or about 0.2 percent by weight or less.

The polymeric matrix may comprise one or more volatile acid neutralizers. Volatile as used in this context means that the acid neutralizer volatilizes away from the polymeric matrix when exposed to the conditions of the first oven, for instance at a temperature of about 200 °C and ambient pressure. Any compound that can neutralize acid groups present in the bath from which the polymeric matrix is formed and which exhibits a boiling point below 200°C may be used. The acid neutralizers may contain one or more nitrogen atoms and may have a boiling point below 165°C. Exemplary acid neutralizers include ammonia, morpholine, dimethyl ethanol amine and diethyl ethanol amine, monoethanolamine. The one or more acid neutralizers may be present in sufficient amount to neutralize the acid groups in the bath. The one or more acid neutralizers may be present in the dispersions in an amount of about 1 percent by weight or greater based on the weight of the polymeric matrix, about 2 percent by weight or greater, or about 3 percent by weight or greater. The one or more acid neutralizers may be present in an amount of about 7 percent by weight or less based on the weight of the polymeric matrix, about 6.0 percent by weight or less, or about 5 percent by weight or less.

The polymeric matrix may comprise one or more additives commonly used in moldable thermoplastic compositions. Exemplary additives include flame retardants (such as calcium carbonate, aluminum trihydrate (ATH), and magnesium hydroxide), stabilizers, pigments and dyes, mold release agents, and anti-stat agents fillers, such as organic or inorganic particles, including clays, talc, titanium dioxide, zeolites, powdered metals, organic or inorganic fibers, including carbon fibers, silicon nitride fibers, steel wire or mesh, and nylon or polyester cording, nano-sized particles, clays, and so forth; tackifiers, oil extenders, including paraffinic or napthelenic oils; and other natural and synthetic polymers, including other polymers according to embodiments of the present disclosure. The polymeric matrices may contain organic or inorganic fillers or other additives such as starch, talc, calcium carbonate, polymeric fibers (including nylon, rayon, cotton, polyester, and polyaramide), metal fibers, flakes or particles, expandable layered silicates, phosphates or carbonates, such as clays, mica, silica, alumina, aluminosilicates or aluminophosphates, carbon whiskers, carbon fibers, nanoparticles including nanotubes, wollastonite, graphite, zeolites, and ceramics, such as silicon carbide, silicon nitride or titania. Silane-based or other coupling agents may also be employed for better filler bonding. The polymeric matrices may contain processing oils, plasticizers, and processing aids. Rubber processing oils having a certain ASTM designation and paraffinic, napthenic or aromatic process oils are all suitable for use. Generally from about 0 to about 150 parts, about 0 to about 100 parts, or about 0 to about 50 parts of processing oils, plasticizers, and/or processing aids per 100 parts of total polymer may be employed. Where present any such ingredients may be present in an amount of about 1 part by weight or greater. Additional processing aids may include conventional waxes, fatty acid salts, such as calcium stearate or zinc stearate, (poly) alcohols including glycols, (poly)alcohol ethers, including glycol ethers, (poly)esters, including (poly)glycol esters, and metal salt, especially Group 1 or 2 metal or zinc- salt derivatives thereof. For some applications, carbon black is one additive useful for UV absorption and stabilizing properties.

A second neutralizer may be added to the dispersion to neutralize carboxylic acid groups contained on polyolefins in the dispersion. Any compound that neutralizes carboxylic acid groups and does not negatively impact the products formed may be utilized. Exemplary secondary neutralizers include alkaline metal hydroxides, alkali metal hydroxides, alkali phosphates, ionomeric moieties, ion exchange compounds, metal carbonates, hydrotalcite like compounds, for instance DHT-4A™ hydrotalcite like compounds, and mixtures thereof. The neutralization of carboxylic acid groups can reduce creep in the parts or articles made with the final composition. As used in this context creep means relaxation under load and time of parts or articles made with the final composition and is measured by stress or strain development at a defined temperature and either constant strain or constant stress. The second neutralizer is present in sufficient amount to reduce creep in the compositions and to aid in the oxidative stability of the polymeric matrix. The second neutralizer is present in an amount of about 250 ppm by weight or greater based on the weight of the polymeric matrix, about 500 ppm or greater, or about 750 ppm or greater. Relative to the polymeric matrix that is coated about the fibers of the fibrous sheet the second neutralizer may be present in an amount of about 1000 ppm by weight or greater based on the weight of the polymeric matrix, about 2000 ppm or greater, or about 3000 ppm or greater. The second neutralizer may be present in an amount of about 5000 ppm by weight or less, about 4000 ppm or less, or about 3000 ppm or less based on the weight of the polymeric matrix. Relative to the polymeric matrix that is coated about the fibers t of the fibrous sheet, the second neutralizer may be present in an amount of about 5% by weight or less based on the weight of the polymeric matrix, about 2% or less, or about 1% or less.

The polymeric matrix may contain a stabilizing agent to promote the formation of a stable dispersion or emulsion. The stabilizing agent may be a surfactant, a polymer (different from the thermoplastic resin or base polymer detailed above), or mixtures thereof. The resin may be a self-stabilizer, so that an additional exogenous stabilizing agent may not be necessary. For example, a self-stabilizing system may include a partially hydrolyzed polyester, whereby combining such polyester with an aqueous base, a polyester resin and surfactant-like stabilizer molecule may be produced. The stabilizing agent may be used as a dispersant, a surfactant for the frothing of a foam formed from the dispersion, or may serve both purposes. One or more stabilizing agents may be used in combination.

The stabilizing agent may be a polar polymer, having a polar group as either a comonomer or grafted monomer. The stabilizing agent may include one or more polar polyolefins, having a polar group as either a comonomer or grafted monomer. Typical polymers include ethylene-acrylic acid (EAA) and ethylene-methacrylic acid copolymers, such as those available under the trademarks PRIMACOR™ (trademark of The Dow Chemical Company), NUCREL™ (trademark of E.I. DuPont de Nemours), and ESCOR™ (trademark of ExxonMobil) and described in U.S. Pat. Nos. 4,599,392, 4,988,781, and 5,938,437, each of which is incorporated herein by reference in its entirety. Other suitable polymers include ethylene ethyl acrylate (EEA) copolymer, ethylene methyl methacrylate (EMMA), and ethylene butyl acrylate (EBA). Other ethylene-carboxylic acid copolymer may also be used.

If the polar group of the polymer is acidic or basic in nature, the stabilizing agent polymer may be partially or fully neutralized with a neutralizing agent to form the corresponding salt. Neutralization of the stabilizing agent, such as a long chain fatty acid or EAA, may require from 25 to 200 percent on a molar basis of a neutralizer or from 50 to 110 percent on a molar basis of a neutralizer. The neutralizing agent may be a base, such as ammonium hydroxide or potassium hydroxide, lithium hydroxide or sodium hydroxide. Those having ordinary skill in the art will appreciate that the selection of an appropriate neutralizing agent depends on the specific composition formulated, and that such a choice is within the knowledge of those of ordinary skill in the art. The neutralizing agent may be a volatile acid neutralizer as disclosed herein.

Where a polymeric stabilizing agent is used, the polymeric stabilizing agent may have a molecular weight of about 5,000 to about 125,000 or between about 5,000 and about 45,000. The polymeric stabilizing agent may have a molecular weight less than half that of the polyolefin resin.

Other stabilizing agents that may be used include long chain fatty acids or fatty acid salts having from 12 to 60 carbon atoms or from 12 to 40 carbon atoms. The salts may be alkali metal or ammonium salts of the fatty acid, prepared by neutralization of the acid with the corresponding base, e.g., NaOH, KOH, $NH_4OH$, and amines, such as ethanol amine, triethanol amine, and the like. These salts may be formed in situ in the dispersion step.

Additional stabilizing agents that may be useful include cationic surfactants, anionic surfactants, or a non-ionic surfactants. Examples of anionic surfactants include sulfonates, carboxylates, and phosphates. Examples of cationic surfactants include quaternary amines. Examples of non-ionic surfactants include block copolymers containing ethylene oxide and silicone surfactants. Surfactants useful as a stabilizing agent maybe either external surfactants or internal surfactants. External surfactants are surfactants that do not become chemically reacted into the polymer during dispersion preparation. Examples of external surfactants useful herein include salts of dodecyl benzene sulfonic acid and lauryl sulfonic acid salt. Internal surfactants are surfactants that do become chemically reacted into the polymer during dispersion preparation. An example of an internal surfactant useful herein includes 2,2-dimethylol propionic acid and its salts.

The dispersing agent or stabilizing agent may be used in an amount ranging from greater than zero to about 60 percent by weight based on the polymeric matrix used. Long chain fatty acids or salts thereof may be used from 0.5 to 10 percent by weight based on the polymeric matrix. Ethylene-acrylic acid or ethylene-methacrylic acid copolymers may be used in an amount from 0.5 to 60 percent by weight based on the polymeric matrix. Sulfonic acid salts may be used in an amount from 0.5 to 10 percent by weight based on the polymeric matrix.

More than one stabilizing agent may be used, and combinations may be used as a dispersant and as a surfactant, for example. One of ordinary skill in the art will recognize that the stabilizing agent used to create a relatively stable aqueous dispersion of polyolefin resin particles may vary depending on the nature of the polyolefin particles employed. Additionally, the stabilizing agent used may be the same or different than the frothing surfactant used in the preparation of a froth from the dispersion.

The polyolefins and the dispersion stabilizing agent may be dispersed in a liquid medium, which may be water. The bath, or polyolefin dispersion, may comprise water with one or more polyolefins dispersed therein. The polyolefins are preferably in a liquid state in the form of particles dispersed in the bath. The stabilizer functions to support the particles in the water bath. The concentration of polyolefins in water may be selected to facilitate coating the fibrous structures, such as fibrous sheets, with the polymeric matrix and to provide a bath viscosity sufficient to efficiently form the composition of fibrous structures and the polymeric matrix.

The concentration of polyolefins in water may be selected to facilitate dispersing the polymeric matrix between the fibers of a fibrous structure and to coat the polymeric matrix on the surface of the fibers or the bundle of fibers and to provide a bath viscosity sufficient to efficiently form the composition of fibers and the polymeric matrix. The viscosity of the bath may be about 10 centipoise (mPa.s) or greater, about 50 centipoise (mPa.s) or greater, or about 140 centipoise (mPa.s) or greater. The viscosity of the bath may be about 500 centipoise (mPa.s) or less, about 300 centipoise (mPa.s) or less, or about 160 centipoise (mPa.s) or less. Below about 10 centipoise, or even about 20 centipoise, the glass content in the resulting fibrous structure may be too high. Above about 500 centipoise, or even above about 300 centipoise, the glass content may be too low. Viscosity can be adjusted by adding one or more of polyolefins, fillers or thickening agents.

The concentration of one or more polyolefins in the water bath is chosen to facilitate dispersing the polyolefins between the fibers and coating the polyolefins about the outside of the fibers in an efficient manner. The water bath contains a number of ingredients which are nonvolatile during processing as described herein. Such nonvolatile ingredients can be referred to as solids. The water bath can contain a concentration of solids which facilitates the preparation of the bundles of fibers with the polymeric matrix disposed about and interspersed within the bundles as described herein. Solids include the polyolefins, fillers, functional additives such as antioxidants, secondary neutralizers and pigments and the like. The concentration of solids in the water bath may be about 10 percent by weight or greater of the bath, about 15 percent by weight or greater, about 20 percent by weight or greater, or about 25 percent by weight or greater. The concentration of the one or more solids in the water bath may be about 65 percent by weight or less of the bath, about 60 percent by weight or less, about 50 percent by weight or less, or about 40 percent by weight or less. The concentration of the one or more polyolefins in the water bath may be about 5 percent by weight or greater of the bath, about 10 percent by weight or greater, or about 15 percent by weight or greater. The concentration of the one or more polyolefins in the water bath may be about 65 percent by weight or less of the bath, about 60 percent by weight or less, or about 55 percent by weight or less. The stabilizer may be present in sufficient amount to stabilize the dispersion of the one or more polyolefins in water. The one or more stabilizers may be present in an amount of about 0.5 percent by weight or greater based on the weight of the water bath, about 1 percent by weight or greater, or about 2 percent by weight or greater. The one or more stabilizers may be present in an amount of about 10 percent by weight or less based on the weight of the water bath, about 8 percent by weight or less, or about 6 percent by weight or less.

A sufficient base may added to neutralize the dispersion of polyolefins in the bath to achieve a pH range of about 6 to about 14 or between about 9 to about 12. Water content of the dispersion may be controlled so that the solids content as described herein is achieved.

The dispersions may include one or more polyolefins, which may include at least one non-polar polyolefin described above, a dispersion stabilizing agent, which may include at least one polar polyolefin, and optionally a filler. With respect to the one or more polyolefins and the dispersion stabilizing agent, at least one non-polar polyolefin may be present in an amount of about 30 percent by weight or greater of the total amount of polymer and dispersion stabilizing agent in the solids in the dispersion or about 50 percent by weight or greater. The at least one non-polar polyolefin may comprise about 99 percent by weight or less of the total amount of polymer and dispersion stabilizing agent in the solids in the dispersion, about 80 percent by weight or less, or about 70 percent by weight or less. With respect to the filler, typically, an amount greater than about 0 to about 1000 parts per hundred of the combined amount of the one or more polyolefins and dispersion stabilizing agent may be used, between about 50 to 250 parts per hundred; between about 10 to 500 parts per hundred; between about 20 to 400 parts per hundred; or between about 0 to about 200 parts per hundred.

The materials present in water in the polyolefin dispersion may comprise about 15 to about 30 percent by weight of the non-water components of a functional polyolefin which is a polyolefin having hydrophilic moieties grafted to the polyolefin, for example a low density polyethylene having acrylic acid groups grafted thereon; about 2 to about 15 percent by weight of a functional polyolefin which exhibits high melt flow rates, for example a polypropylene wax having maleic anhydride grafted thereto; about 50 to about 80 percent by weight of a non-functional (non-polar) polyolefin which can be a polypropylene homopolymer or copolymer, where the copolymer can be a random copolymer or impact copolymer polypropylene which may have a melt flow rate of about 20 to about 50 and an elongation at break of about 10 to 20 percent according to test method ASTM D1238-88. The polymeric matrix formed may contain a similar compositional makeup except the levels of neutralizer are preferably those as disclosed after treatment of the fiber fibrous structure with the polymeric matrix in one or more ovens.

The bath may be maintained at a temperature at which the one or more polyolefins are in a molten or liquid state so as to facilitate dispersion of particles of the one or more polyolefins in water. The bath may be maintained at ambient temperatures, of about 18 °C or greater or about 20 °C or greater. The bath may be maintained at a temperature of about 30 °C or less or about 25 °C or less. Other bath temperatures may be used. The particles of the one or more polyolefins in the water bath may be of a size sufficient to facilitate efficient formation of the polymeric matrix about the fibers. As used herein, particle size is the volume-mean particle size. Particle size may be measured by laser diffraction techniques. A particle size in this description refers to the diameter of the polymers in the dispersion. For polymer particles that are not spherical, the diameter of the particle is the average of the long and short axis of the particle. Particle sizes can be measured on a Beckman-Coulter LS230 laser-diffraction particle size analyzer. The volume average size of the particles may be about 10 microns or less, about 5 microns or less, or about 4 microns or less. The volume average size of the particles may be about 100 nanometers or more, about 200 nanometers or more, or about 500 nanometers or more. For example, the volume average size of the particles may be about 1 micron or more. The dispersion used in the method as described herein may have a volume average particle size of about 5 micrometers or less with a pH of about 12 or less.

The dispersions may optionally include a filler wetting agent. A filler wetting agent generally may help make the filler and the polyolefin dispersion more compatible. Useful wetting agents include phosphate salts, such as sodium hexametaphosphate. A filler wetting agent can be included in a composition of the present invention at a concentration of at least about 0.5 part per 100 parts of filler, by weight. The dispersion may optionally include a thickener. Thickeners may be useful to increase the viscosity of low viscosity dispersions. Thickeners suitable for use may be any known in the art such as for instance polyacrylate type or associate non-ionic thickeners such as modified cellulose ethers. For example, suitable thickeners include ALCOGUM™ VEP-II (tradename of Alco Chemical Corporation), RHEOVIS™ and VISCALEX™ (tradenames of Ciba Ceigy), UCAR ® Thickener 146, or ETHOCELL™ or METHOCELL™ (tradenames of the Dow Chemical Company) and PARAGUM™ 241 (trade name of Para-Chem Southern, Inc.), or BERMACOL™ (trademark of Akzo Nobel) or AQUALON™ (trademark of Hercules) or ACUSOL ® (trademark of Rohm and Haas). Thickeners may be used in any amount necessary to prepare a dispersion of desired viscosity. The viscosity of the dispersion is controllable. Addition of the thickener to the dispersion including the amount of filler may be performed with conventional means to result in viscosities as needed.

The polyolefin dispersions may be characterized by their stability when a filler is added to the polyolefin / dispersion stabilizing agent mixture. In this context, stability refers to the stability of viscosity of the resultant aqueous polyolefin dispersion. In order to test the stability, the viscosity is measured over a period of time. For example, viscosity measured at 20 °C may remain +/- 10% of the original viscosity over a period of 24 hours, when stored at ambient temperature.

The bath can be prepared by contacting the ingredients with agitation or milling in a heated vessel, for instance in a batch process. The one or more polyolefins and a dispersion stabilizing agent may be melt-kneaded in an extruder along with water and a neutralizing agent to form a dispersion. A filler may be added during or after blending the one or more polyolefins and dispersion stabilizing agent.

The fibrous structures may be passed through the bath for a sufficient time to prepare a composition containing the desired amounts of fibrous structures and the polymeric matrix. It is desired to achieve this concentration as quickly as possible. Residence time can be expressed in the speed of the fibrous structure through the bath, for instance expressed as meters per minute through the bath. The speed of the fibrous structure through the water bath may be about 0.5 meters per minute or greater, about 0.75 meters per minute or greater, or about 1.0 meters per minute or greater. The speed of the fibers through the water bath may be about 40.0 meters per minute or less, about 25 meters per minute or less, or about 10 meters per minute or less. The length of the path of the fibers through the bath can be adjusted. The length of the path of the fibrous structure through the bath may be about 1 cm or greater, about 4 cm or greater, or about 6 cm or greater. The length of the path of the fibrous structure through the bath may be about 80 cm or less, about 50 cm or less, or about 30 cm or less. The fibers of the fibrous structure, such as a fibrous sheet, may be substantially coated with the polymeric matrix. The fibers may be coated in such a way that about 60 percent or more of the surface of the fibers is coated; about 70 percent or more, about 80 percent or more, or about 90 percent or more. The fibers may be coated in such a way that about 100 percent or less of the surface of the fibers is coated. For example, about 90 percent to about 100% of the surface of the fibers is coated with the polymeric matrix. The process as described herein therefore allows for sufficient, or excellent, wetting of the fibrous structure. The substantial coating of the fibers achieves benefits such as a higher contribution of each fiber to the mechanical properties of the entire fibrous sheet structure.

After exiting the bath, one or more rods or other surfaces may be employed for wiping off the fibrous structure, where the fibrous structure contacts the one or more rods or other surfaces and is pulled across each rod or other surface. The rods may be positioned so that upon exiting the bath, the fibrous structure is pulled across, over, and/or under one or more rods to wipe off excess water or polymer dispersion. For example, a series of metal rods may be employed, where the fibrous structure is pulled over, under, under, and over four rods, respectively. The fibrous structure may be pulled over and under rods in an alternating fashion. The fibrous structure may be pulled between two or more rods, where one rod is located above the sheet and another rod is located below the fibrous structure. One or more rods may be positioned immediately following the bath to remove excess moisture. One or more rods may be positioned at or near the entrance to the oven to remove additional moisture prior to entering the oven. One or more of the rods may have a texture or comb-like profile. The one or more rods may be formed from any suitable material, such as metals or polymeric material.

After exiting the bath, and optionally passing under, over, or across one or more rods, the fibrous structures with a polymeric matrix coated on the fibers is passed through an oven to remove residual water and the volatile acid neutralizers and to sinter and/or melt the polymeric matrix to so as to enhance the coating of the polymeric matrix on the fibers. The conditions of the oven are chosen to achieve removal of water and other volatile components including the acid neutralization agents, the coating of the polymeric matrix on the fibers, and sintering of the polymeric matrix about the fibers. The water content after passing the fibrous structure and polymeric matrix through the oven is at a level that does not interfere with further processing of the fibrous structure and polymeric matrix and which does not negatively impact the properties of structures prepared from the fibrous structure and polymeric matrix. The water content may be about 0.15 percent by weight or less, about 0.05 percent by weight or less, or about 0.01 percent by weight or less. The acid neutralizer may be removed during this process. The acid neutralizer may be removed to a level such that the resulting the fibrous structure and polymeric matrix does not exhibit significant odor in further processing. The concentration of acid neutralizer in the fibrous structure and polymeric matrix may be about 0.05 percent by weight or less about 0.02 percent by weight or less, or about 0.005 percent by weight or less. The oven may be set at a temperature such that the volatile components are removed in an efficient manner. The temperature of the oven may be about 150 °C or greater, about 165 °C or greater, or about 185 °C or greater. The temperature of the oven may be about 350 °C or less, about 300 °C or less, or about 280 °C or less. The residence time of the fibrous structure in the oven is dependent upon the temperature of the oven, the presence of flowing gas or vacuum and the length of the oven. The residence time in the oven, taking this into consideration, is selected to achieve the desired level volatile components. The residence time in the oven may be about 10 seconds or greater about 20 seconds or greater, or about 30 seconds or greater. The residence time in the oven may be about 90 minutes or less, about 60 minutes or less, about 30 minutes or less, about 25 minutes or less, or about 20 minutes or less.

The oven may also be run under conditions so as to enhance the removal of volatile components from the vicinity of the fibrous structure and polymeric matrix. Any such conditions that enhance the removal of volatile components from the vicinity of the fibrous structure and polymeric matrix may be used. Exemplary conditions include flowing a gas over the fibrous structure, such as air or an inert gas, such as nitrogen, argon and the like; applying a vacuum to the oven; and the like. It may be desirable to pass an inert gas through the oven so as to remove volatile components and to significantly reduce the oxygen concentration in the oven to reduce the susceptibility of oxidizing the polymeric components that are on the fibers.

The oven may have two or more different sections or the fibrous structures can be passed through two ovens in sequence. The first oven section or oven can serve the primary function of removing water from the fibrous structures as quickly as possible. The second and subsequent ovens or oven sections may function to sinter the strands so as to enhance bond strength between the fibers and the polymeric matrix. The first oven or oven section can utilize higher temperatures for the purpose of removing water as quickly as possible. The subsequent ovens or oven sections may generally operate at lower temperatures with drier air to reduce oxidation of the polymeric matrix. The subsequent oven sections may have lower moisture and/or oxygen content than the first oven or oven sections. The subsequent ovens or oven sections may have reduced oxygen. Oxygen can be reduced by adding inert gas to the atmosphere of these ovens. The ovens or sections of ovens can have little or no oxygen, for example about 1 percent by volume or less or about 0.5 percent by volume or less.

After exiting the oven the fibrous structures are cooled so as to allow the polymer matrix to solidify and cut to a desired length as discussed hereinbefore. Cooling may be achieved by any know processes for cooling. Exemplary cooling processes include exposure to ambient temperatures, reduced temperatures, flowing a gas at ambient or below ambient temperatures over the bundles, open air cooling over some path length, and the like. Cutting may be achieved by any method known in the art. The fibrous structures may be cut in the direction transverse to processing, the direction transverse to passing them through the bath. Exemplary cutting processes include cutting using rotary cutter devices, rotary needle knife push through type devices, or guillotine type devices. Prior to entering the oven a plurality of fibrous structures, bundles of fibers, and/or polymeric matrices may be shaped into a shape in the direction transverse to the processing direction. The plurality of fibrous structures may be passed through a die of the desired shape. As the polymeric matrix may still be in a molten or partially molten state upon exit from the bath, and therefore as the fibrous structures may be passed through a die, the fibrous structures passed through the die may be fused in the desired shape by the polymeric matrix as the structures exit the die. The shape can be any desired shape as disclosed herein. The shaped products can be cooled after exiting the die or passed directly into the oven as disclosed hereinafter. Such shaped products can be used for a variety of specialized applications for instance, as reinforcement structures, conduits for cables, tapes for in-mold reinforcing of molded goods, tubes, single or multi strand rods for cast molding processes, used as fibrous concentrate in systems with dilution polymers and compounds, and the like. Where the fibrous structures are in sheet form, the sheets may be cut in a direction transverse to the processing direction on line and thereafter cut into a desired shape for further processing.

Alternatively, the fibrous structures may be further processed prior to cutting to the desired length so the fibrous structures and polymeric matrix can be subjected to any process to enhance their use in downstream processes. The fibrous structure having polymeric matrix coated about the fibers, which may shaped as disclosed hereinbefore, may be processed to apply one or more components about the fibrous structure. The one or more components can be any component that enables the use of the fibrous structures in downstream processing. Exemplary coating materials include one or more thermoplastic polymers, for example one or more of the polyolefins, a different thermoplastic polymer, or one or more different polyolefins, fillers, stabilizer, and other functional polymer bound packages and masterbatches, and the like. The component may be one or more of the previously applied polyolefins. The component may be one or more different polyolefins. A different polyolefin can impart additional properties or performance characteristics as desired for an end use application. The component may be one or more high melt flow rate polyolefins or a polyolefin prepared using metallocene catalysts, for example polyolefins prepared using metallocene catalysts wherein the polyolefins exhibit high melt flow rates as disclosed herein. The fibrous stucture with polymeric matrices may have a high melt flow rate polyolefin coated thereabout. The high melt flow rate polyolefin may exhibit a melt flow rate, as measured by Melt Flow Rate according to test method ASTM D1238-88, of about 70 or greater, about 100 or greater, or about 500 or greater. The high melt flow rate polyolefin may exhibit a melt flow rate of about 1500 or less, about 1200, or about 1,000 or less. Exemplary high melt flow rate polyolefins include uncracked polyolefins, polyolefins prepared using metallocene catalysts and the like. The high melt flow rate polyolefin may be applied in sufficient amount to enhance further processing as discussed herein, and may comprise other additives or functional ingredients and other polymers to further enhance the performance of the final compositions. The coated fibrous structures may contain about 10 percent by weight or greater of a thermoplastic composition, one or more polyolefins, based on the weight of the polymeric matrix, fibrous structure and the thermoplastic composition; about 20 percent by weight or greater; or about 30 percent by weight or greater. The coated fibrous structures may contain about 80 percent by weight or less of a thermoplastic composition, one or more polyolefins, based on the weight of the polymeric matrix, the fibrous structure and the thermoplastic composition; about 70 percent by weight or less; or about 60 percent by weight or less. The amount of fibers and the polymeric matrix can be about 15 percent by weight or greater based on the weight of the polymeric matrix, the fibers and the thermoplastic composition; about 20 percent by weight or greater; or about 25 percent by weight or greater. The amount of fibers and the polymeric matrix can be about 80 percent by weight or less based on the weight of the polymeric matrix, the fibers and the thermoplastic composition; about 75 percent by weight or less; or about 70 percent by weight or less. Fibrous structures having different structures may be modified in the same manner.

Additional components may be applied to the fibrous structures and polymeric matrix using any process that allows coating of fibers of the fibrous structure with an additional component. Exemplary processes include wire coating, calendering, spraying, dipping, dusting and the like. The additional component may be applied in a molten state. The fibers may include combinations of different fiber types and sources. After applying the additional component, the fibrous structure and polymeric matrix may be passed through an oven to agglomerate, homogenize, convert, crosslink, heat treat, dry the applied component and the like. An oven as described hereinbefore can be used. Further treatment steps may be combined into the oven step or separated from it and include e-beam, UV treatment, corona treatment or plasma treatment or a combination of such treatments prior final use of the fibrous structures and polymeric matrix and any components applied onto them.

A fibrous composite or finished fibrous structure may be formed by layering two or more fibrous structures, such as fibrous sheets. The fibrous structures may each first be prepared as described herein, including passing the fibrous structure through the polymeric dispersion and drying the fibrous structure, such as by pulling the sheets over or under one or more metal rods for wipe-off, passing the sheets through an oven, or both. The layering may allow for tuning properties of the fibrous composite based on its intended application. Tunable properties include flexural modulus and flexural strength of the fibrous composite. The layering of materials may provide a desired thickness of the fibrous composite or finished fibrous structure. The fibrous structures, such as fibrous sheets, may be attached to each other by casting or sprinkling polymeric powders onto one or both sheets and then pressing the sheets together, and optionally applying heat to melt or soften the polymeric powders. The fibrous structures, such as fibrous sheets, may be joined by additional layers that are not fibrous sheets. An additional layer may be located between two or more fibrous structures. Solid films of polymer may be rolled on the surface of a fibrous structure or in between two fibrous structures. A layer of plastic may be added between two fibrous structures. For example, a layer containing polypropylene may be sandwiched between two fibrous structures. One or more layers may include one or more adhesives, such as to adhere two fibrous structures to each other. The multi-layered composite may be subjected to elevated temperatures and/or pressures to secure the layers together. The fibrous composite may include one or more facing layers or outer layers. The fibrous composite may include one or more foils, metallic layers, or both. For example, the fibrous composite may include one or more mylar layers. The layers selected may allow the properties, thickness, or both, of the fibrous composite or finished fibrous structure to be tuned based on the intended application, where tunable properties include flexural modulus and flexural strength. The amount of glass within the finished composite may depend upon the number of layers within the composite and the amount of polymer used within and between the layers. The fibrous composite may have a total glass content of about 85 percent by weight or less, about 80 percent by weight or less, or about 70 percent by weight or less. The fibrous composite may have a total glass content of about 15 percent by weight or more, about 25 percent by weight or more, or about 40 percent by weight or more. The fibrous composite may have a total polymer or polypropylene content of about 65 percent by weight or less, about 60 percent by weight or less, or about 55 percent by weight or less. The fibrous composite may have a total polymer or polypropylene content of about 15 percent by weight or more, about 20 percent by weight or more, or about 35 percent by weight or more.

The fibrous structures, fully assembled into a fibrous composite or each fibrous structure individually, may undergo one or more additional shaping processes. The fibrous structure, such as a fibrous sheet or fully assembled fibrous composite including two or more layered fibrous structures, may undergo one or more thermoforming steps to achieve a desired shape or three-dimensional profile. The fibrous structure may be overmolded to add other materials to the structure. The fibrous structure may be overmolded with a polymeric material, filled polymeric material, where the polymeric material may comprise polyolefins, polyamides, polycarbonate, polyester, styrene polymers such as styrene-acrylonitrile, acrylonitrile-butadiene-styrene, and other styrene copolymers, grafted polymers, olefin copolymers, other engineering polymers, the compounds and blends of all of these mentioned polymers, or a combination thereof. The fibrous structure may be overmolded with a thermoplastic or thermoelastomer. One or more ribs can be overmolded onto the structure to provide additional shaping or to provide structural reinforcement to the fibrous structure. The fibrous structure may be foamed onto by direct over foaming or adhering with a glue or pretreatment to a foam.

The fibrous structures can be used to prepare a number of useful structures by any process typically utilized to form structures from thermoplastic compositions. Exemplary processes include, injection molding, compression molding, blow molding, rotomolding, cast molding, sheet molding, casting with thermosets and the like. During any or all of these processes, a spacer may be employed to provide a constant or generally constant thickness to the fibrous structure, to reduce or prevent the polymeric matrix flowing out of the molder, to ensure that the molder is able to close, to improve the surface quality of the molded fibrous structure, and the like. The spacer may be metallic. The spacer may be magnetic. The spacer may be inlaid on the fixed side of the mold. Fibrous structures having a thermoplastic composition about the fibers and the polymeric matrix may be processed with other polyolefins in such processes. Exemplary structures formed include interior and exterior car parts such as door carrier plates, front end carriers, lift gates, instrument panel carriers, shrouds and fans, consoles, roof trim, and the like.

Tapes, rods or sheets of the fibers and the polymeric matrix can be used to reinforce a number of structures by adhering them by melt bonding, inlay molding, or adhesives to structures. Exemplary structures include car seats, front end carriers, door panels, bonnets, rear hatch, lift gates, under body panels, cowls, instrument panel carriers, and in any application that benefits from localized reinforcements. The compositions can be used as components structures such as those disclosed herein. The fibrous structures, such as those in the form of a sheet, may be used to prepare the reinforcement basis for compression molded panels that may, after shaping, be overmolded with natural or compounded polymer compositions or local reinforcement as inlay in molded or overmolded goods. Such products may provide reinforcement mechanical properties, such as flexural modulus, flexural strength, impact performance, the like, or combination thereof.

The aqueous dispersions may further comprise common ingredients such as other conventional additives. These include, but are not limited to, fillers, flame retardants (such as calcium carbonate, aluminum trihydrate (ATH), and magnesium hydroxide), stabilizers, pigments and dyes, mold release agents, and anti-stat agents. Other polymer or cellulosic based fiber compositions may be used in combination with the glass fibers. Additives may be combined with the dispersion, or with the thermoplastic resins, stabilizing agents, or fillers used in the dispersion. For example, additives may include a wetting agent, coalescing agent, fire retardants, surfactants, anti-static agents, antifoam agent, anti block, wax-based dispersion, pigments, a neutralizing agent, a thickener, a compatibilizer, a brightener, a rheology modifier, a biocide, a fungicide, reinforcing fibers, and other additives known to those skilled in the art. While optional for purposes of the present invention, other components may be highly advantageous for product stability during and after the manufacturing process.

The compositions may be used to prepare compositions with any targeted fiber content, for example about 20% or more, about 30% or more, about 40% or more, or even about 90 % or more, but this can vary. Molded products prepared to a final composition with 30% glass fiber content in a polyolefin matrix exhibit a variety of advantageous properties. The molded products demonstrate excellent tensile strengths, as measured according to ISO R527 or ASTM D638 it is expected that both tests would yield consistent results, and preferably exhibit a tensile strength of about 80 MPa or greater, more preferably about 85 MPa or greater, and most preferably about 90 MPa or greater. The molded products may demonstrate excellent tensile elongation at break as measured according to ISO R527 or ASTM D638 and may exhibit a tensile elongation at break of about 1 percent or greater, about 1.5 or greater, or about 1.8 percent or greater. The molded products demonstrate excellent notched Izod performance as measured according to ASTM D256 and preferably exhibit a notched Izod of about 10 $KJ/m^2$ or greater, more preferably about 20 $KJ/m^2$ or greater, and most preferably about 25 $KJ/m^2$ or greater. Fibrous structures of glass fibers in a polyolefin matrix prepared according to the process of the disclosure may exhibit low fuzz or fibers protruding from the fibrous structure. In addition such fibers are capable of being processed in high efficiency processing equipment, for instance can be conveyed by air.

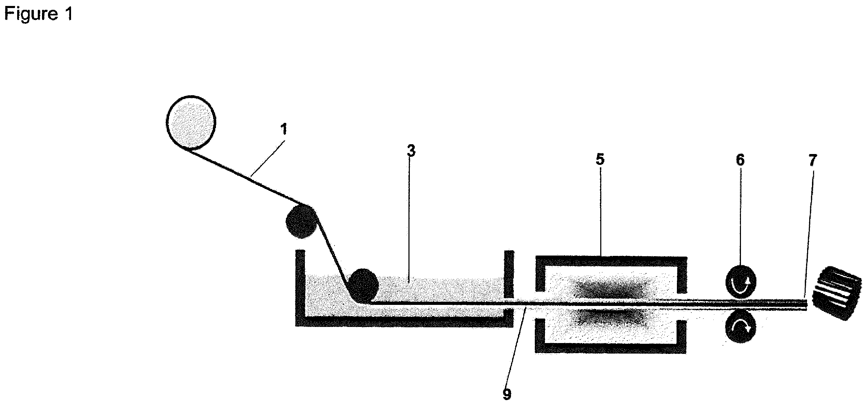

Figure 1 illustrates a process as disclosed herein. Disclosed is a preformed fibrous sheet 1, a bath 3 containing a water dispersion of polyolefins, an oven 5, a sheet puller 6 and a cutter 7. The preformed fibrous sheet 1 passes through the bath 3, to coat the preformed fibrous sheet with a polymeric matrix 9. The preformed fibrous sheet 1 with the polymeric matrix 9 disposed thereabout is passed into and through the oven 5 to remove volatile ingredients and to sinter the polymeric matrix 9 about the preformed fibrous sheet 1. A sheet puller 6 is located after the oven 5 which pulls the preformed fibrous sheet 1 through the process. The preformed fibrous sheet 1 with the polymeric matrix 9 thereabout is then passed through a cutter 7 to cut the polymeric matrix 9 and preformed fibrous sheet 1 into the desired length or shape.

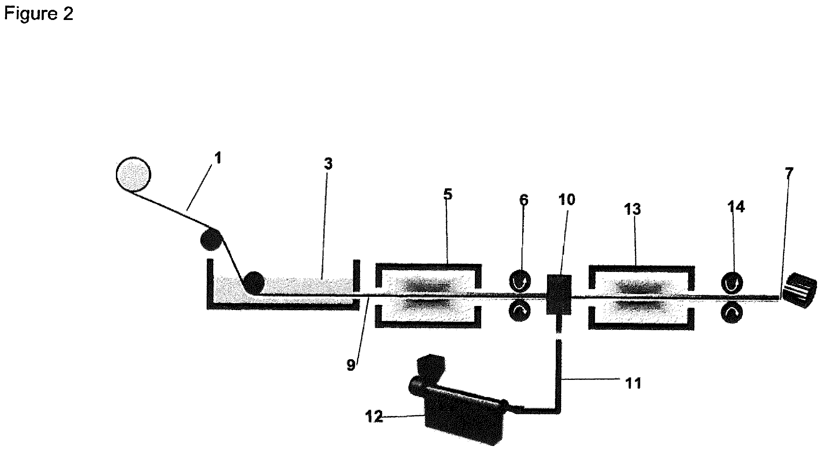

Figure 2 illustrates a process as described herein. The process is essentially the same as Figure 1 through the strand puller 6. Thereafter the polymeric matrix 9 and preformed fibrous sheet 1 are passed through a coater 10, which may be used in conjunction with one or more sets of calender rolls, connected by line 11 to an extruder 12 that feeds the coater 10 with a polyolefin in the molten state. The molten polyolefin is coated about polymeric matrix 9 and preformed fibrous sheet 1 in the coater 10. Thereafter the polyolefin coated polymeric matrix 9 preformed fibrous sheet 1 are passed into a second oven 13 to sinter the polyolefin coating about the polymeric matrix 9 and preformed fibrous sheet 1. The coated polymeric matrix 9 and preformed fibrous sheet 1 are pulled through a second sheet puller 14 and cut in the cutter 7.

**Illustrative Embodiments of the Invention**

The following examples are provided to illustrate the invention, but are not intended to limit the scope thereof. All parts and percentages are by weight unless otherwise indicated.

Process for preparing with a fibrous structure with a polymeric matrix

The following ingredients are utilized in preparing fibrous structures with polymeric matrices.

The Primary Polyolefin Dispersion is a dispersion is prepared by either batch agitation or passing the mixture through a compounder, that comprises about 50 weight percent polymeric solids in water. The polymeric solids may comprise functional and non-functional polyolefins, functional polyolefins include a low density polyethylene with acrylic acid grafted thereto and a maleic anhydride grafted polypropylene wax. The non-functional polyolefins further comprise, homo or copolymers of polypropylene with specific ethylene content. The polymeric solids may contain a plastomer or elastomer. The above primary polyolefin dispersion is neutralized with a volatile neutralizer.

The secondary polyolefin dispersion is prepared by either batch agitation or passing the mixture through a compounder, that comprises about 30 to about 50 weight percent polymeric solids in water. The polymeric solids comprise functional polyolefins. The secondary polyolefin dispersion is neutralized with a volatile neutralizer such as ammonia, DMEA (dimethyl ethanol amine), or other volatile neutralizer.

Where two dispersions are utilized they are mixed in specific ratio and to this mixture a combination of additives are added.

Functional polyolefin 1 is a low density polyethylene - with acrylic acid grafted thereto (LDPE EAA) (PRIMA-COR<sup>tm</sup> 5980i polyethylene - ethylene acrylic acid copolymer)

Functional Polyolefin 2 is a maleic anhydride grafted polypropylene wax (LICOCENE<sup>tm</sup> maleic anhydride grafted polypropylene wax)

Functional polyolefin 3 is a include a maleic anhydride grafted olefin polymer such as polypropylene of molecular weight of 5000 Mw.

Non polar polyolefin 1 polypropylene ethylene copolymer having a 44 MFR and 3 mole percent ethylene content;

Non polar polyolefin 2 is a homopolymer of polypropylene having a 950 MFR;

Plastomer/Elastomer is a polypropylene ethylene copolymer prepared using metallocene catalysts containing 16 mole present of ethylene VERSIFY<sup>tm</sup> 3401 plastomer/elastomer The additives include the following ingredients.

Antioxidant 1 - tris(2,4-ditert-butylphenyl)phosphite

Antioxidant 2 - pentaerythritol tetrakis(3(3,5-di-tert-butyl-4-hydroxyphenyl)propionate

Antioxidant 3 - octadecyl-3-(3,5-di-tert- butyl-4-hydroxyphenyl)-propionate

Antioxidant 4 - didodecyl-3,3'-thiodipropionate

Dispersion stabilizer - a hydrotalcite

Carbon black pigment in emulsified or loosely compacted powder form.

Fibrous sheet - A fibrous structure (woven, nonwoven, sandwich or a combination thereof) with a sizing applied to the surface of the fibers having a Tex of 2400 and fiber diameter of 13 microns.

Process description

The first process step comprises guiding the fibrous sheet into one or more wetting baths for coating with the low viscosity, about 150 mPa.s, water based polymer dispersion and additive mixture. The fibrous sheet with wet dispersions additive mixture coated onto the fibrous sheet is guided into an oven, where the water is dried off in hot air (up to 350°C inlet) that also sinters/melts the polymer intricately diffused in between the glass fibers. After this step a continuous glass sheet is formed and cooled and has, depending on the process conditions 10 to 30 percent by weight of non-glass components (polymeric, additives). In a following step the coated fibrous sheet can be cut to specific size depending on the application.

The fibrous sheet is coated with a polymeric component, blend, filled polymer, reactive, or functional polymer that may be similar or dissimilar from the polymer components in the previous process steps, to a glass content of the sheet from about 15% up to about 70%. Optionally, this fibrous sheet is pulled through a secondary oven section (similar to the previous oven section). The fibrous sheet is then shaped and cooled. Shaping of the coated fibrous sheet can be done by thermoforming or other shaping processes.

Creep is measured according to ASTM D2990.

Example 1 and Comparative Example 1

The dispersion tested in Example 1 contained as non-water ingredients the components listed in Table 1.

Table 1

| Components | Parts per hundred |
|---|---|
| polypropylene ethylene copolymer having a 44 MFR | 44 |
| low density polyethylene EAA copolymer | 14.7 |
| maleic anhydride grafted polypropylene wax | 14.7 |
| Carbon black | 1.2 |
| tris(2,4-ditert-butylphenyl)phosphite | 1.1 |
| pentaerythritol tetrakis(3(3,5-di-tert-butyl-4-hydroxyphenyl)propionate | 4.9 |
| octadecyl-3-(3,5-di-tert- butyl-4-hydroxyphenyl)-propionate | 0.55 |
| didodecyl-3,3'-thiodipropionate | 1.66 |
| Di methyl ethanol amine | 7 |

A dispersion of 100 parts by weight of the above ingredients in about 100 parts by weight of water is prepared as described above.

Two formulations are tested wherein the concentration of dimethyl ethanol amine as the acid neutralizer is up to 5 percent in the dispersion bath. In Example 1 the four antioxidants are used in the recited amounts and in Comparative Example 1 none are present. Table 2 shows the test results for the two examples that differ only by the antioxidant mixture used. In Table 2 the samples contain 30 % by weight of glass fibers.

Table 2

| Example/Antioxidant amount test results | Example 1 | Comparative Example 1 |
|---|---|---|
| AO1 ppm | 400 | 0 |
| AO2 ppm | 2000 | 0 |
| AO3 ppm | 300 | 0 |
| AO4 ppm | 450 | 0 |
| Ash % | 83 | 80.4 |
| Tensile Modulus Mpa | 6650 | 5960 |
| Tensile at Break Mpa | 101 | 75.4 |
| Tensile elongation at break | 2.02 | 1.84 |
| Izod notched KJ/m$^2$ | 29.7 | 29.4 |

The Ash test involves taking a known amount of sample, placing the weighed sample into a dried / pre-weighed porcelain crucible, burning away the polymer in an air atmosphere at temperatures above 500°C, and weighing the crucible after it is has been cooled to room temperature in a desiccator. The ash test is performed according to test ASTM D2584, D5630 or ISO 3451. These results illustrate that the addition of antioxidants is crucial for not only process and sheet quality but also for final material mechanical performance.

Examples 2 to 5

A fibrous sheet is formed by the process described Example 1 using the components described in Table 1. Molded test specimens are prepared and tested. The differences in the formulations and the results of testing is provided in Table 3.

Table 3

| Example/ Variation - test | Example 2 | Example 3 | Example 4 | Example 5 |
|---|---|---|---|---|
| Color | Natural - none | Natural - none | Black | Black |
| % fibers | 30 | 40 | 30 | 40 |
| E-Modulus Mpa | 6650 | 8400 | 6200 | 8100 |
| Elongation at break | 2.2 | 1.7 | 2.0 | |
| TsY N/mm$^2$ | 101 | 98 | 94 | 95 |
| Charpy Unnotched KJ/m$^2$ | 49 | | 47 | |

Color is provided using carbon black in the amount of 0.1 percent based on the final composition in a 30% glass containing part. The Unnotched Charpy is performed according to test ASTM D256. TsY is tensile strength at yield and performed according to test ISO 527-1, ISO 527-2.

Example 6

Coated fibrous sheets prepared as described in Example 1 are passed through a molten bath of a homopolymer of polypropylene having a melt flow rate of 950 to form a coating on the fibrous sheet of the polypropylene homopolymer wherein ratio of the fraction of high melt flow rate polypropylene to the coated fiber structure is varied. The results are compiled in Table 4. The volatiles for the fibers of the coated fibrous sheet is about 66 ppm as measured by VOC testing.

Table 4

| Glass + POD | High Flow PP | Ratio | MFR |
|---|---|---|---|
| 0.353 | 0.582 | 1.65 | 602.95 |
| 0.353 | 0.518 | 1.47 | 402.67 |
| 0.353 | 0.453 | 1.28 | 280.07 |
| 0.353 | 0.388 | 1.10 | 201.37 |
| 0.353 | 0.324 | 0.92 | 148.85 |
| 0.353 | 0.259 | 0.73 | 112.62 |
| 0.353 | 0.194 | 0.55 | 86.93 |
| 0.353 | 0.129 | 0.37 | 68.28 |
| 0.353 | 0.065 | 0.18 | 54.45 |
| 0.353 | 0.000 | 0.00 | 44.00 |

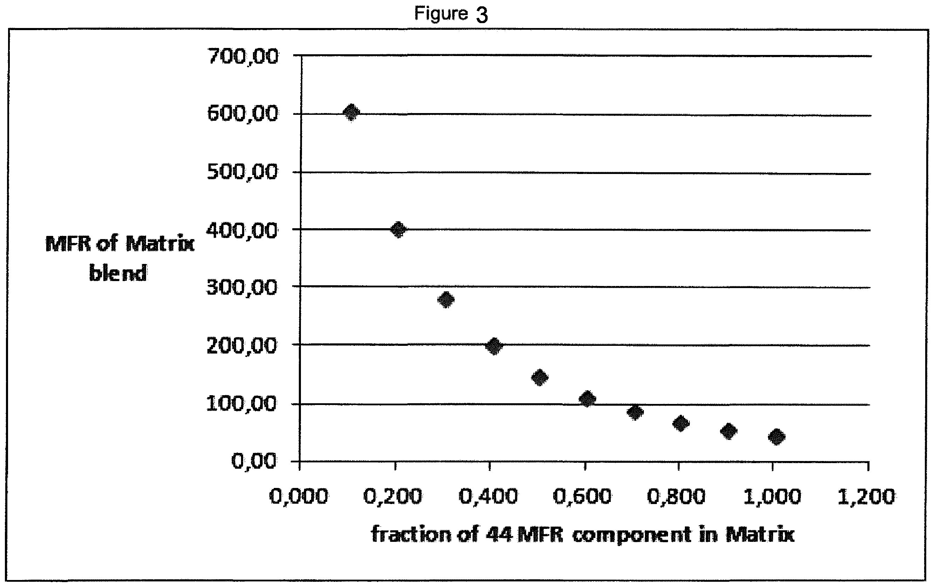

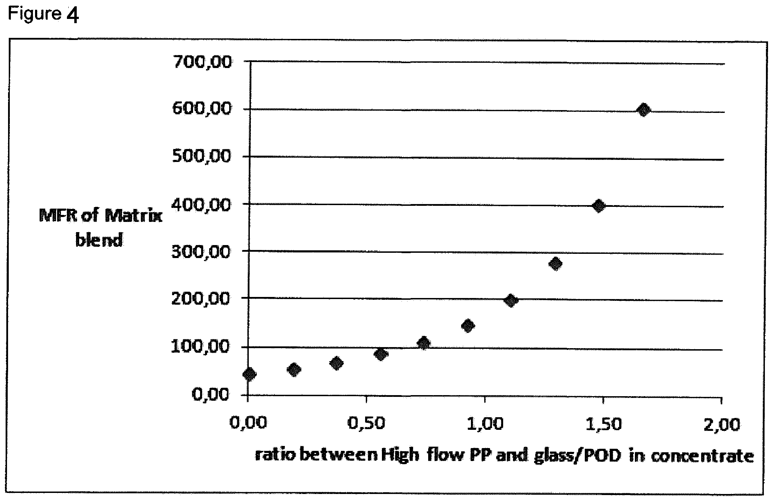

The results are illustrated by a graph of Melt Flow Rate of the polymeric fraction of the matrix blend against weight fraction of 44 melt flow rate polypropylene in the blend, see Figure 3. Practically for producing the coated fibrous sheet it is more useful to express the amount of high flow propylene polymer that needs to be coated onto the fibrous sheet and dispersion polymers about the fibers to reach a certain flow enhancing effect of the final polymeric matrix. Figure 4 shows a graph of the MFR of the total polymeric fraction versus the weight ratio of high flow polypropylene polymer coated onto the fibrous sheet and dispersion coated thereon.

Example 7

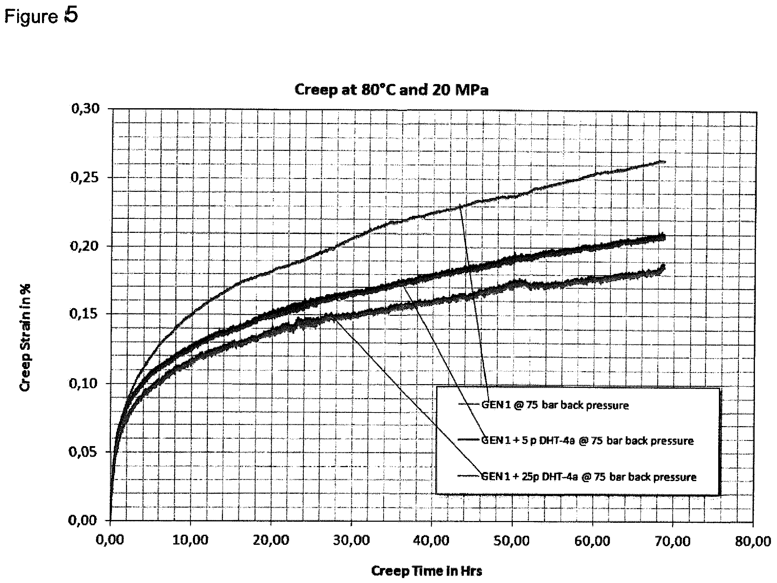

Three test specimens are prepared using the composition prepared in Example 1. One without hydrotalcite, one with 5 ppm of hydrotalcite and one with 25 ppm of hydrotalcite. Hydrotalcite is added as 10% PP masterbatch in system. The Creep test is performed on the specimens. The results are illustrated in Figure 5. Tensile properties are measured for the samples and the data is provided in Table 5.

Table 5

| Test Units | Specimen mm | BP MPa | without hydrotalcite | 0.5 parts hydrotalcite | 2.5 parts hydrotalcite |
|---|---|---|---|---|---|
| TY MPa | 4 | 75 | 101.6 | 102.6 | 105.5 |

(continued)

| Test Units | Specimen mm | BP MPa | without hydrotalcite | 0.5 parts hydrotalcite | 2.5 parts hydrotalcite |
|---|---|---|---|---|---|
| Elongation% | 4 | 75 | 1.9 | 2.0 | 2.0 |
| Modulus MPa | 4 | 75 | 7640 | 7250 | 7570 |
| TY MPa | 1.5 | 75 | 101 | 104.5 | 98.4 |
| Elongation% | 1.5 | 75 | 1.9 | 1.9 | 1.9 |
| Modulus MPa | 1.5 | 75 | 7500 | 7750 | 7345 |
| TY MPa | 1.5 | 150 | 97.4 | 99.3 | 97 |
| Elongation% | 1.5 | 150 | 1.8 | 1.8 | 1.8 |
| Modulus MPa | 1.5 | 150 | 7565 | 7665 | 7220 |

The results in Table 5 illustrate that standard mechanical features are not adversely affected by the hydrotalcite, but that creep resistance is significantly improved.

Example 8

A 1.5 ounce swatch of a chopped glass strand mat is prepared having a net glass weight of 8.2 grams. The wetted weight of the glass when passed through the dispersion of Example 1 is 27.43 grams. After drying the swatch using an oven, the dry weight of the glass and polymeric matrix is 15.2 grams, resulting in a glass percentage of 53.9% in the dry composite.

A 3 ounce swatch of fiberglass fabric is prepared having a net glass weight of 2.55 grams. The wetted weight of the glass when passed through the dispersion of Example 1 is 4.61 grams. After drying the swatch using an oven, the dry weight of the glass and polymeric matrix is 3.3 grams, resulting in a glass percentage of 77.3% in the dry composite, The swatches are molded according to Table 6.

Table 6

| Mold Type | Length (m) | Width (m) | Surface area (m$^2$) |
|---|---|---|---|
| Triangle mold with two thicknesses combined (T) | 0.075 | 0.025 | .001875 |
| Sinus wave mold (W) | 0.06 | 0.05 | 0.003 |

Table 7

| Test | Swatch Type | Mold Type | Oven Temperature Heating (°C) | | Heating Time (mins) | Mold Temperature (°C) | Manual Press (kN) | Applied Pressure (MPa) | Cooling Time (min) | Composite |
|---|---|---|---|---|---|---|---|---|---|---|
| | | | Start | End | | | | | | |
| A | 1.5 oz chopped strand mat | T | 140 | 170 | 15 | 20 | 100 | 53.3 | 10 | 1 layer |
| B | 1.5 oz chopped strand mat | T | 140 | 170 | 15 | 20 | 150 | 80.0 | 10 | 1+3 layer |
| C | 3 oz fiberglass fabric | W | 170 | 180 | 5 | 20 | 150 | 50.0 | 10 | 2 layers |

Test A results in excellent impression on the thin part of the wall. Test B results in excellent impression of both thicknesses of the wall. Test C results in excellent impression where the two layers can be separated manually. These results show the fibrous sheet selection flexibility, as these swatches contain fibers of significant fiber density differences.

Example 9

Three samples of woven glass mats coated with the polymeric dispersion are prepared. Each sheet of woven glass mat is manually pulled through the dispersion of Table 1, where the temperature is 22.5 degrees C. The rods for wiping off the woven glass mat after being pulled through the dispersion are placed at the same eight, with the first two rods next to each other and the third rod further away, closer to the oven entrance. The woven glass mat and polymeric matrix are fed over the first rod, under the second rod, and over the third rod. The woven glass mat and polymeric matrix are held to drip vertically and are hung in an oven to dry. A metal bar is clipped on both sides over the full width of the mat to provide tension while drying. The woven glass mat and polymeric matrix are removed from the oven and hung in the same position at room temperature to cool and solidify. Samples 1 and 2 are prepared from a single layer. Sample 3 is prepared by layering one woven glass mat coated with the polymeric matrix onto another woven glass mat coated with the polymeric matrix. The drying conditions of each sample and the percentage of glass fibers present within each sample is presented in Table 8.

Table 8

| sample | length (meter) | oven temp set (degC) set | oven temp actual (degC) | dry time (min) | fabric weight (gram) | dry weight (gram) | matrix (%) | ash on vertical sheet | |
|---|---|---|---|---|---|---|---|---|---|
| | | | | | | | | GF % top | GF% bottom |
| 1 | 1 | 250 | 140 → 250 | 40 | | | | 86.0 / 85.8 / 86.3 | 86.2 / 84.5 / 85.2 |
| 2 | 1 | 250 | 140 → 250 | 20 | 134.8 | 159.0 | 15.2 | 85.1 / 85.5 | 84.4 / 84.4 / 84.9 |
| 3 | 2 x 1 (2 layers) | 150 | 140 → 150 | 90 | 270.2 | 315.6 | 14.4 | 87.6 / 87.3 / 87.5 | 84.0 / 83.4 / 83.8 |

The example shows coated fibrous sheets can be produced with significant glass fiber content.

Example 10

A woven glass fabric is prepared having fibers of a continuous length. The fabric is cut to have a length of 5 meters and a width of 0.5 meters. The fabric is pulled through a polymeric dispersion prepared according to Table 9, where the dispersion has a starting viscosity of 86 centipoise.

Table 9

| Component | Percent by Weight |
|---|---|
| Mechanically produced polyolefin dispersion | 80.80 |
| Non-ionic emulsion of a modified polypropylene | 15.00 |
| Carbon black | 0.65 |
| Hyrdotalcite-like compound | 0.30 |
| PentaerythritolTetrakis(3-(3,5-di-tert-butyl-4-hydroxyphenyl) propionate) | 2.65 |
| Tris(2,4-ditert-butylphenyl)phosphite | 0.60 |

The fabric coated with the polymeric matrix is wiped off via four metal rods, where the fabric is pulled over the first rod, under the second rod, under the third rod, and over the fourth rod before being laid flat on a metal sheet. The fabric coated with the polymeric matrix is then pulled through the oven set to 150 degrees C having a length of 10 meters at a rate of 1 cm per second. The finished composite, upon exiting the oven, is measured for percentage of glass in each 1 meter segment of the sheet and the VOC in ppm. The measurements are provided in Table 10.

Table 10

| Segment of sheet | % GF | VOC (ppm) |
|---|---|---|
| 1 | 81.2 | 9 |
| 2 | 80.9 | 5 |
| 3 | 78.2 | 6 |
| 4 | 79.4 | 7 |
| 5 | 80.1 | 5 |

Example 11

Fibrous sheets of woven glass are prepared in accordance with the teachings herein and passed through the dispersion as prepared in Example 1 to create fibrous sheets coated with a polymeric matrix. Each sample is a fibrous composite prepared according to the details of Tables 11 and 12. Flexural modulus and flexural strength are measured by suitable ASTM or ISO tests, such as ASTM D7264, ASTM D790, or ISO 178. The fibrous composites of Samples 1-5 are prepared with 80% by weight of glass fibers and 20% by weight of polypropylene. The thickness of the samples and the flexural modulus and flexural strength are achieved by layering fibrous sheets coated with the polymeric matrix.

Table 11

| | | | Compression Molded Composite | | | | | Flexural (av. of 2-5 strips, cut @ same angle as ref) | |
|---|---|---|---|---|---|---|---|---|---|
| Sample | Number of sheets | Number of PP layers in between | GF (%) | PP (%) | Thickness (mm) | All glass (g) | All PP (g) | Modulus (Mpa) | Strength (Mpa) |
| 1 | 1 | 0 | 80 | 20 | 0.43 | 32.00 | 8.00 | 4755 | 99 |
| 2 | 2 | 0 | 80 | 20 | 0.75 | 68.73 | 17.18 | 6660 | 145 |
| 3 | 3 | 0 | 80 | 20 | 1.04 | 94.26 | 23.57 | 6345 | 118 |
| 4 | 4 | 0 | 80 | 20 | 1.36 | 137.056 | 34.264 | 6495 | 142 |
| 5 | 5 | 0 | 80 | 20 | 1.45 | 75.992 | 18.998 | 5645 | 141 |

The fibrous composites of Samples 6-9 are formed by layering fibrous sheets and polypropylene layers in an alternating fashion. Each of Samples 6-8 includes three fibrous sheets, with two polypropylene layers, where each polypropylene layer is sandwiched between two fibrous sheets. The glass content and polypropylene content varies between Samples 6-8, as shown in Table 12. Sample 9 includes four fibrous sheets and three polypropylene layers, where each of the polypropylene layers is sandwiched between two fibrous sheets so the layers are arranged in an alternating fashion.

Table 12

| | | | Compression Molded Composite | | | Flexural (av. of 2-5 strips, cut @ same angle as ref) | |
|---|---|---|---|---|---|---|---|
| Sample | Number of sheets | Number of PP layers in between | GF % | PP % | thickness mm | Modulus (Mpa) | Strength (Mpa) |
| 6 | 3 | 2 | 71 | 29 | 1.10 | 6940 | 180 |

EP 3 363 773 A1

(continued)

| Sample | Number of sheets | Number of PP layers in between | Compression Molded Composite | | | Flexural (av. of 2-5 strips, cut @ same angle as ref) | |
|---|---|---|---|---|---|---|---|
| | | | GF % | PP % | thickness mm | Modulus (Mpa) | Strength (Mpa) |
| 7 | 3 | 2 | 57 | 43 | 0.91 | 6710 | 175 |
| 8 | 3 | 2 | 44 | 56 | 1.00 | 7375 | 174 |
| 9 | 4 | 3 | 62 | 38 | 1.06 | 9340 | 223 |

The total glass content and total polypropylene content for each layer and for the finished composite for Samples 6-9 are shown in Table 13.

26

Table 13

| Sample | Sheet Layer 1 (g) | Sheet Layer 2 (g) | Sheet Layer 3 (g) | Sheet Layer 4 (g) | PP Layer 1 (g) | PP Layer 2 (g) | PP Layer 3 (g) | All Glass from Sheets (g) | All PP from Sheets (g) | All Added PP (g) | All PP (g) |
|---|---|---|---|---|---|---|---|---|---|---|---|
| 6 | 24.44 | 24.07 | 24.92 | | 5.53 | 3.39 | | 58.74 | 14.69 | 8.92 | 23.61 |
| 7 | 40.08 | 40.78 | 39.48 | | 23.1 | 26.25 | | 96.27 | 24.07 | 49.35 | 73.42 |
| 8 | 23.74 | 22.88 | 23.61 | | 28.21 | 29.41 | | 56.18 | 14.05 | 57.62 | 71.67 |
| 9 | 15.73 | 18.18 | 17.85 | 15.81 | 7.48 | 5.79 | 7.02 | 54.06 | 13.51 | 20.29 | 33.80 |

Each sample is then compression molded under the conditions as shown in Table 14.

Table 14

| Compression Molding | | | | | |
|---|---|---|---|---|---|
| Sample | Mold Spacer (mm) | Temperature | Pressure (kN) | Time (min) | Cooled to Room Temp. @ Press |
| 1 | 0.5 | | | | |
| 2 | 0.5 | 190°C | 200 | 5 | yes |
| 3 | 0.5 | 200°C | 200 | 10 | yes |
| 4 | 0.5 | 220°C | 200 | 5 | yes |
| 5 | 1 | 220°C | 200 | 10 | |
| 6 | 1 | 220°C | 200 | 5 | yes |
| 7 | 0.5 | 220°C | 200 | 5 | yes |
| 8 | 1 | 220°C | 200 | 5 | yes |
| 9 | 1 | 220°C | 200 | 5 | yes |

The results show a wide variety of final part properties can be tailored by stacking fibrous sheets, and by including interlayers of additional thermoplastic properties, the final part can be further tailored and improved to a specific customer's specifications or needs. The present teachings, as illustrated through Samples 1-9, provide flexibility in creating composite materials. The ability to layer fibrous sheets coated with a polymeric matrix, with or without additional polymeric layers, permits the thickness of the composite, as well as properties such as flexural modulus and flexural strength, to be tuned or customized based on the intended application of the fibrous composite material.

Parts by weight as used herein refers to 100 parts by weight of the composition specifically referred to. Any numerical values recited in the above application include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value, and the highest value enumerated are to be considered to be expressly stated in this application in a similar manner. Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints. The term "consisting essentially of" to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist essentially of the elements, ingredients, components or steps. Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.

**Claims**

1. A composition comprising:

   a. a fibrous sheet having one or more layers; and
   b. a polymeric matrix comprising one or more polyolefins, one or more hindered phenol antioxidants, one or more phosphite antioxidants, one or more acid neutralizers, and optionally one or more thioester antioxidants;

   wherein the polymeric matrix coats from about 80 percent to about 100 percent of the surface of fibers forming the fibrous sheet.

2. The composition of claim 1, wherein the fibrous sheet is formed from woven fibers, nonwoven fibers, or a combination thereof.

3. The composition of claim 1 or 2, wherein the composition comprises about 20 percent by weight to about 95 percent by weight of fibers.

4. The composition of any of the preceding claims, wherein the fibrous sheet is formed from glass fibers, carbon fibers, metal based fibers, polymeric fibers, or a combination thereof.

5. The composition of claim 4, wherein the fibrous sheet is formed from glass fibers and the fibrous sheet has a glass content from about 15 percent by weight to about 85 percent by weight; and wherein the fibrous sheet comprises about 10 percent to about 40 percent by weight of non-glass components.

6. The composition of claims 4 or 5, wherein the fibrous sheet comprises about 100 percent by weight of glass fibers, non-glass components, and the polymeric matrix.

7. The composition of any of the preceding claims, wherein the polymeric matrix comprises:

a. from about 95.7 to about 99.96 percent by weight of one or more polyolefins;
b. from about 0.01 to about 1.0 percent by weight of one or more hindered phenol antioxidants;
c. from about 0.01 to about 0.1 percent by weight of one or more phosphite antioxidants;
d. from about 0.01 to about 0.2 percent by weight of one or more thioester antioxidants; and
e. from about 0.01 to about 3.0 percent by weight of one or more acid neutralizers.

8. The composition of any of the preceding claims, wherein the polymeric matrix coated upon the surface of fibers forming the fibrous sheet has a thermoplastic composition that is coated about the polymeric matrix.

9. The composition of any of the preceding claims, comprising two or more fibrous layers, and optionally including one or more polymeric layers therebetween, to form a multi-layer fibrous sheet.

10. A method comprising:

a. preforming a fibrous sheet of any of the preceding claims;
b. passing the fibrous sheet through one or more wetting baths for impregnating the fibrous sheet with a polymer dispersion to form a polymeric matrix of any of the preceding claims about the fibrous sheet;
c. passing the polymeric matrix and fibrous sheet through an oven to volatilize away volatile components; wherein the polymeric matrix coats from about 80% to about 100% of the surface of the fibers of the fibrous sheet.

11. The method of claim 10, wherein the method comprises layering two or more fibrous layers, and optionally including one or more polymeric layers therebetween, to form a multi-layer fibrous sheet.

12. The method of claim 10 or 11, wherein the method further comprises a step of calendering the polymeric matrix and fibrous sheet with a polymeric component, which optionally is a dissimilar polymeric component from the polymer dispersion to form the polymeric matrix.

13. The method of any of claims 10 through 12, wherein the method further comprises a step of thermoforming the polymeric matrix and fibrous sheet.

14. The method of any of claims 10 through 13, wherein the method further comprises a step of over molding the thermoformed sheet with a thermoplastic or thermoelastomer.

15. The method of any of claims 10 through 14, wherein the method further comprises a step of compressing the fibrous sheet with one or more polymer films located on one or both sides.

Figure 1

EP 3 363 773 A1

Figure 2

Figure 3

Figure 4

EP 3 363 773 A1

Figure 5

34

Europäisches
Patentamt

European
Patent Office

Office européen
des brevets

# EUROPEAN SEARCH REPORT

Application Number

EP 17 15 6653

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 103 289 186 A (SHANGHAI GRAVEL RESISTANT PLATINUM TECHNOLOGY CO LTD) 11 September 2013 (2013-09-11) | 1-9 | INV. C03C25/10 D06M15/227 |
| Y | * claims 1-4; examples * | 10-15 | |
| X | WO 2013/134083 A1 (DOW GLOBAL TECHNOLOGIES LLC [US]) 12 September 2013 (2013-09-12) | 1-9 | |
| Y | * examples * | 10-15 | |
| Y | WO 2007/078536 A1 (DOW GLOBAL TECHNOLOGIES INC [US]; WEVERS RONALD [NL]; KENNEDY JAMES G) 12 July 2007 (2007-07-12) * paragraph [0044]; claim 1 * | 10-15 | |

TECHNICAL FIELDS
SEARCHED (IPC)

C03C
D06M
C08K
C08L

The present search report has been drawn up for all claims

| Place of search | Date of completion of the search | Examiner |
|---|---|---|
| Munich | 15 May 2017 | Pollio, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 6653

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2017

| Patent document cited in search report | | Publication date | Patent family member(s) | | Publication date |
|---|---|---|---|---|---|
| CN 103289186 | A | 11-09-2013 | NONE | | |
| WO 2013134083 | A1 | 12-09-2013 | CN | 104159966 A | 19-11-2014 |
| | | | EP | 2822995 A1 | 14-01-2015 |
| | | | JP | 2015510953 A | 13-04-2015 |
| | | | KR | 20140132357 A | 17-11-2014 |
| | | | SG | 11201404816X A | 30-10-2014 |
| | | | TW | 201348415 A | 01-12-2013 |
| | | | US | 2015038629 A1 | 05-02-2015 |
| | | | WO | 2013134083 A1 | 12-09-2013 |
| WO 2007078536 | A1 | 12-07-2007 | BR | PI0620708 A2 | 22-11-2011 |
| | | | CA | 2633974 A1 | 12-07-2007 |
| | | | CN | 101356312 A | 28-01-2009 |
| | | | CN | 104532574 A | 22-04-2015 |
| | | | EP | 1963564 A1 | 03-09-2008 |
| | | | ES | 2404098 T3 | 23-05-2013 |
| | | | IN | 266885 B | 11-06-2015 |
| | | | JP | 5465433 B2 | 09-04-2014 |
| | | | JP | 6064008 B2 | 18-01-2017 |
| | | | JP | 2009520053 A | 21-05-2009 |
| | | | JP | 2014040604 A | 06-03-2014 |
| | | | JP | 2016035061 A | 17-03-2016 |
| | | | KR | 20080081170 A | 08-09-2008 |
| | | | TW | 200736447 A | 01-10-2007 |
| | | | US | 2007141933 A1 | 21-06-2007 |
| | | | US | 2009253321 A1 | 08-10-2009 |
| | | | WO | 2007078536 A1 | 12-07-2007 |
| | | | ZA | 200805196 B | 30-09-2009 |

EPO FORM P0459

For more details about this annex : see Official Journal of the European Patent Office, No. 12/82

**EP 3 363 773 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6818698 B
- US 5437928 A
- US 5891284 A
- US 5972166 A
- US 2008118728 A
- US 7803865 B
- US 3645992 A
- US 4076698 A
- US 5272236 A
- US 5278272 A

- US 5504172 A
- WO 0001745 A
- US 8916640 B
- US 4762890 A
- US 4927888 A
- US 4950541 A
- US 4599392 A
- US 4988781 A
- US 5938437 A

**Non-patent literature cited in the description**

- **GREG SAUNDERS ; BEN MACCREATH.** Analysis of Polyolefins by GPC/;SEC Application Compendium. Agilent Technologies, Inc, 2011

37